# EUROPEAN PATENT SPECIFICATION

(11) **EP 4 419 603 B1**
(45) Date of publication and mention of the grant of the patent: **02.09.2026**
(21) Application number: 22808708.6
(22) Date of filing: 20.10.2022
(51) Int. Cl.: C09D 5/00, C09D 5/02

(54) **METHOD FOR PRODUCING SELF-HEALING ORGANIC-INORGANIC MATERIALS**
VERFAHREN ZUR HERSTELLUNG VON SELBSTHEILENDEN ORGANISCH-ANORGANISCHEN MATERIALIEN
PROCÉDÉ DE PRODUCTION DE MATÉRIAUX ORGANIQUES-INORGANIQUES AUTOCICATRISANTS

(30) Priority: 21.10.2021 EP 21382946
(43) Date of publication of application: 28.08.2024
(73) Proprietor: ASOCIACIÓN CENTRO DE INVESTIGACIÓN COOPERATIVA EN NANOCIENCIAS "CIC nanoGUNE", 20018 San Sebastian, Guipuzcoa (ES)
(72) Inventor: KNEZ, Mato, E-20018 San Sebastián, Guipúzcoa (ES); IURKEVICH, Oksana, E-20018 San Sebastián, Guipúzcoa (ES)
(74) Representative: ABG Intellectual Property Law, S.L.
(86) International application number: PCT/EP2022/079300
(87) International publication number: WO 2023/067111

(56) References cited:
- WO-A1-2021/105349
- WO-A2-2015/199791
- US-A1- 2007 166 542
- US-A1- 2013 017 405

## Description

### FIELD OF THE INVENTION

The present invention relates to the area of vapor phase processing for producing self-healing organic-inorganic materials. More specifically, the present invention relates to a self-healing organic-inorganic material, a method for the preparation of self-healing organic-inorganic materials, to a self-healing organic-inorganic material obtainable by said method, and to the uses of said organic-inorganic material.

### BACKGROUND

Self-healing materials are artificial or synthetically-created substances that have the built-in ability to automatically repair damages to themselves without any external diagnosis of the problem or human intervention. Materials degrade over time due to fatigue, environmental conditions, or damage incurred during operation. Cracks and other types of damage on a microscopic level have been shown to change the properties of materials, and the propagation of cracks can lead to eventual failure of the material. Self-healing covers all classes of materials, including polymers, metals, ceramics, and cementitious materials. Self-healing materials have been disclosed in the prior art. WO 2021/105349 A1 discloses a material comprising a metallo supramolecular polymer co-network (MSMC) comprising acrylate and dimethylsiloxane units with appended aromatic units, and a substrate onto which the polymeric substrate is coated. WO 2015/199791 A2 describes a self-healing coating produced by incorporating a thermally self-healing chemical coating on smooth and/or roughened solid. US 2013/017405 A1 describes a material comprising a metal substrate and a self-healing coating composition which comprises metallic or polymeric microcapsules filled with a polymeric precursor in a fluid state. US 2007/166542 A1 describes a self-healing coating including a polymeric matrix precursor into which a polymerizer and capsules with an activator are dispersed.

Commonly, metallic conductor self-healing materials are formed with bottom-up approaches. For example, healing electrode materials can be formed by embedding a liquid metal into a polymer. This was demonstrated for an eutectic Ga-In alloy (EGaln) droplets dispersed in a silicone elastomer by Markvicka et al. (E. J. Markvicka, M. D. Bartlett, X. Huang, and C. Majidi, Nat. Mater., vol. 17, no. 7, pp. 618-624, Jul. 2018). In addition, Tee et al. (B. C. K. Tee, C. Wang, R. Allen, and Z. Bao, Nat. Nanotechnol., vol. 7, no. 12, pp. 825-832, Nov. 2012) dispersed chemically modified micro-nickel particles into an organic polymer. Besides, healing of an inorganic metal oxide surface can be achieved for oxide coatings deposited on substrates of the same metal. For example, Yang et al describes aluminum oxide films healed in Al/Al₂O₃ systems (Y. Yang, A. Kushima, W. Han, H. Xin, and J. Li, Nano Lett., vol. 18, no. 4, pp. 2492-2497, 2018). However, these routes significantly limit the choice of the substrates and also offer a poor control of the material at the microstructure level. Furthermore, when using synthesis methods comprising a solvent; the solvent molecules can seriously damage the properties of the resulting materials through shielding of reactions or simply by creating cavities in the material that negatively affect the mechanical, electronic or optical properties of those materials.

In summary, prior art methods for the preparation of self-healing organic-inorganic materials do not allow to selectively modify the nano/microstructure of the material. Additionally, there is a need for new versatile processes that produce self-healing organic-inorganic materials. In addition, new self-healing organic-inorganic materials with enhanced stability, mechanical properties and durability are required.

### BRIEF DESCRIPTION OF THE INVENTION

The inventors of the present invention have found a method that allows the preparation of self-healing organic-inorganic materials. The method is able to selectively modify the nano/microstructure of the self-healing organic-inorganic materials in a controlled way. Moreover, the self-healing organic-inorganic materials of the invention have an enhanced stability, mechanical properties (such as good flexibility and bending properties) and durability. In addition, the authors of the present invention have observed that the self-healing organic-inorganic materials of the invention are able to correct damage caused by normal usage of those materials (such as cracks) therefore, preventing costs incurred by material failure and reducing material inefficiency caused by material degradation over time. Thus, in a first aspect, the invention is directed to a self-healing organic-inorganic material comprising:
- a polymeric substrate,
- a coating layer directly on the surface of the polymeric substrate, and
- an infiltrated layer within the polymeric substrate;

wherein the coating layer and the infiltrated layer comprise at least a metal, semimetal or semiconductor element;
wherein said at least a metal, semimetal or semiconductor element is the same in the coating and infiltrated layers; and
wherein the polymeric substrate or the infiltrated layer within the polymeric substrate, comprises a halogen.

A second aspect of the invention is directed to a process for the preparation of self-healing organic-inorganic materials, comprising the steps of:
i) providing a polymeric substrate in a reaction chamber;
ii) if the polymeric substrate does not comprises a halogen, pulsing a precursor comprising an halogen into the reaction chamber followed by an exposure time and then, purging of the reaction chamber,
   to obtain the polymeric substrate of step (i) infiltrated and optionally coated;
iii) pulsing a precursor comprising a metal, semimetal or semiconductor element into the reaction chamber followed by an exposure time and then, purging of the reaction chamber; and
   pulsing a co-reactant into the reaction chamber followed by an exposure time and then purging of the reaction chamber, wherein the co-reactant reacts with at least part of the precursor comprising a metal, semimetal or semiconductor element, to obtain the polymeric substrate of step (i) or of step (ii) coated and infiltrated;
wherein the exposure time between the pulsing and the purging of step (ii) and/or of step (iii) is at least 5 seconds.

In a third aspect, the present invention is directed to a self-healing organic-inorganic material obtainable by the process of the invention in any of its particular embodiments.

A further aspect of the invention is directed to a device comprising
- at least a layer of the self-healing organic-inorganic material of the invention in any of its particular embodiments; and
- an organic light-emitting device (OLED) comprising at least one electrode;
wherein the layer of the self-healing organic-inorganic material is coating the at least one electrode.

In a further aspect, the present invention is directed to the use of the self-healing organic-inorganic material of the invention according to any of its particular embodiments, in the fabrication of electronic materials, optoelectronic materials, absorbent materials, personal safety equipment, sport equipment, construction and building materials, textiles, packaging, automotive and aircraft materials.

### FIGURES

Figure 1: Transmission electron microscope (TEM) micrograph of a ParyleneC sample infiltrated with In₂O₃.
Figure 2: EDX (a) elemental composition depth profile and (b) Atomic concentrations after different etching times calculated from XPS data of a ParyleneC sample infiltrated with In₂O₃.
Figure 3: SEM images of ParyleneC/In₂O₃ cross-sections before and after exposure to air.
Figure 4: SEM images of a cut done by a focus ion beam (FIB) on the surface of a ParyleneC/In₂O₃ sample before (a) and after exposure to air (b).
Figure 5: SEM image of a FIB cut on the surface of PVC infiltrated with DEZ/water (a) before exposure to ambient air; (b) after exposure to ambient air and room temperature.
Figure 6: SEM image of a FIB cross-section of a PDMS polymer infiltrated with 15 cycles of thionyl chlorine/DEZ/water (a) before exposure to ambient air; (b) after exposure to ambient air and room temperature; and (c) enlarged image of the image B.
Figure 7: SEM image of focus ion beam (FIB) cross-section of a Nylon polymer infiltrated with 15 cycles of thionyl chlorine/DEZ/water: (a) before exposure to ambient air and (b) after exposure to ambient air and room temperature.

### DETAILED DESCRIPTION OF THE INVENTION

Unless defined otherwise, all technical and scientific terms used herein have the same meaning as commonly understood to one of ordinary skill in the art to which this disclosure belongs. As used herein, the singular forms "a" "an" and "the" include plural reference unless the context clearly dictates otherwise.

### Self-healing organic-inorganic material

In the context of the present invention the term "self-healing organic-inorganic material" refers to what is commonly understood in the art and includes materials that can repair damages to themselves, for example, some self-healing materials may counter degradation through the initiation of a repair mechanism that responds to micro-damage such as cracks, in particular, said repair mechanism comprises chemical reparation of the damage.

In the context of the present invention the term "organic-inorganic" refers to materials that comprise organic and inorganic compounds or mixtures of compounds as commonly understood in the art.

In a first aspect, the invention is directed to a self-healing organic-inorganic material comprising:
- a polymeric substrate,
- a coating layer directly on the surface of the polymeric substrate, and
- an infiltrated layer within the polymeric substrate;

wherein the coating layer and the infiltrated layer comprise at least a metal, semimetal or semiconductor element;
wherein said at least a metal, semimetal or semiconductor element is the same in the coating and infiltrated layers; and
wherein the polymeric substrate or the infiltrated layer within the polymeric substrate, comprises a halogen.

In an embodiment, the self-healing organic-inorganic material consists of
- a polymeric substrate,
- a coating layer directly on the surface of the polymeric substrate, and
- an infiltrated layer within the polymeric substrate;

wherein the coating layer and the infiltrated layer comprise at least a metal, semimetal or semiconductor element;
wherein said at least a metal, semimetal or semiconductor element is the same in the coating and infiltrated layers; and
wherein the polymeric substrate or the infiltrated layer within the polymeric substrate, comprises a halogen.

### Polymeric substrate

In the context of the invention the term "polymeric substrate" refers to an organic based polymeric material that may be coated and infiltrated such as polymers, biopolymers, polymeric hybrid materials, polymeric layered structures, and combinations thereof; preferably a polymer, a polymer derivative or a combination thereof. In an embodiment, the biopolymers are selected from polypeptides, nucleic acids and polysaccharides, such as starch, pectin, chitosan, alginate, carrageenan, cellulose and cellulose (e.g. methylcellulose, hydroxymethyl cellulose, hydroxypropyl cellulose, carboxymethyl cellulose).

In an embodiment, the polymeric substrate is an organic based polymer, preferably selected from homopolymers, copolymers, multicomponent polymers or combinations thereof.

In an embodiment of the invention, the polymeric substrate of the present invention comprises an organic polymer having one or more functional groups selected from hydroxyl, ether, amino, ketone, halogen, carboxylic acid, ester, amide, acid halide, imide, imine, acrylate, terephthalate, alkenyl, and aryl.

In an embodiment, the polymeric substrate is selected from organosilicon polymers, polyurethanes, polyamides, polyxylylenes, parylenes, polyamines, polyimides, polyalkylenes, polyacrylates, polymethacrylates, polyalcohols, polyethers, polyesters, polyvinyls, polyvinylidenes, halopolymers, polypyrroles, polythiophenes, polystyrenes, polyaromatic hydrocarbons, polysaccharides, polypeptides, polysiloxanes, polysilazanes, polyketones and mixtures thereof. In a particular embodiment, the polymeric substrate of the present invention comprises a polymer selected from organosilicon polymers, polyurethane, polyamides, polyxylylenes, parylenes, polyamines, polyimides, polyalkylenes, polyacrylates, polymethacrylates, polyalcohols, polyethers, polyesters, polyvinyls, polyvinylidenes, halopolymers, polypyrroles, polythiophenes, polystyrenes, polyketones, and mixtures thereof; preferably from organosilicon polymers, polyurethane, polyamides, polyxylylenes, parylenes, polyamines, polyimides, polyalkylenes, polyacrylates, polyalcohols, polyethers, polyesters, polyvinyls, polyvinylidenes, polypyrroles, polythiophenes, polystyrenes, polyketones, and mixtures thereof; more preferably from organosilicon polymers such as silanols, siloxides, silenes, siloles or siloxanes for example polydimethylsiloxane (PDMS), polyamides such as aliphatic polyamides for example polycaprolactam, polyphthalamides or aromatic polyamides, polyxylylenes such as poly(2,5 dichloro xylylene); parylenes such as poly(chloro-p-xylylene), poly(iodine-p-xylylene), poly(fluoro-p-xylene), poly(difluoro-p-xylene), poly (tetrafluoro-p-xylene), poly(dichloro-p-xylylene), poly(tetrachloro-p-xylylene), poly(bromo-p-xylene), poly(dibromo-p-xylene) or poly(tetrabromo-p-xylene); polyvinyls such as polyvinyl chloride, chlorinated polyvinyl chloride, polyvinyl iodine, iodate polyvinyl iodine, polyvinyl bromide, or polyvinyl fluoride, polyvinylidenes such as polyvinylidene chloride, polyvinylidene iodine, polyvinylidene bromide or polyvinylidene fluoride, and mixtures thereof.

In a particular embodiment, the polymeric substrate consists of a polymer selected from organosilicon polymers, polyurethanes, polyamides, polyxylylenes, parylenes, polyamines, polyimides, polyalkylenes, polyacrylates, polymethacrylates, polyalcohols, polyethers, polyesters, polyvinyls, polyvinylidenes, halopolymers, polypyrroles, polythiophenes, polystyrenes, polyaromatic hydrocarbons, polysaccharides, polypeptides, polysiloxanes, polysilazanes, polyketones and mixtures thereof. In a particular embodiment, the polymeric substrate of the present invention consist of a polymer selected from organosilicon polymers, polyurethane, polyamides, polyxylylenes, parylenes, polyamines, polyimides, polyalkylenes, polyacrylates, polymethacrylates, polyalcohols, polyethers, polyesters, polyvinyls, polyvinylidenes, halopolymers, polypyrroles, polythiophenes, polystyrenes and polyketones, and mixtures thereof; preferably from organosilicon polymers, polyurethane, polyamides, polyvinyls, polyamines, polyimides, polyalkylenes, polyacrylates, polyalcohols, polyethers, polyesters, polypyrroles, polythiophenes, polystyrenes, polyketones, and mixtures thereof; more preferably from organosilicon polymers, polyamides, polyxylylenes, parylenes, polyvinyls, polyvinylidenes and mixtures thereof.

In a particular embodiment, the polymeric substrate comprises a halogen; wherein the halogen is selected from a chlorine, fluorine, iodine, bromine or a mixture thereof; preferably the halogen is chlorine. In a more particular embodiment, the polymer substrate comprises a halogen as a functional group such as a halogen covalently bonded to a carbon atom of the polymeric substrate.

In a particular embodiment, the polymeric substrate of the present invention comprises a halogen-containing polymer; preferably selected from the group consisting of halogen-containing polyxylylenes, parylenes, polyvinyls, polyvinylidenes and mixtures thereof; more preferably selected from the group consisting of poly(chloro-p-xylylene), poly(dichloro-p-xylylene), poly(tetrachloro-p-xylylene), polyvinyl chloride, chlorinated polyvinyl chloride, polyvinylidene chloride, poly(lodine-p-xylylene), polyvinyl Iodine, iodate polyvinyl iodine, polyvinylidene Iodine, polyvinyl bromide, polyvinylidene bromide, polyvinyl fluoride, polyvinylidene fluoride, poly(fluoro-p-xylene), poly(difluoro-p-xylene), poly (tetrafluoro-p-xylene), poly(bromo-p-xylylene), poly(dibromo-p-xylylene), poly(tetrabromo-p-xylylene), and combinations thereof.

In a particular embodiment, the polymeric substrate of the present invention consists of a halogen-containing polymer; preferably selected from the group consisting of halogen-containing polyxylylenes, parylenes, polyvinyls, polyvinylidenes and mixtures thereof; more preferably selected from the group consisting of poly(chloro-p-xylylene), poly(dichloro-p-xylylene), poly(tetrachloro-p-xylylene), polyvinyl chloride, chlorinated polyvinyl chloride, polyvinylidene chloride, poly(lodine-p-xylylene), polyvinyl Iodine, iodate polyvinyl iodine, polyvinylidene Iodine, polyvinyl bromide, polyvinylidene bromide, polyvinyl fluoride, polyvinylidene fluoride, poly(fluoro-p-xylene), poly(difluoro-p-xylene), poly (tetrafluoro-p-xylene), poly(bromo-p-xylylene), poly(dibromo-p-xylylene), poly(tetrabromo-p-xylylene), and combinations thereof.

In another particular embodiment, the polymeric substrate can be selected from homopolymers and copolymers, including alternating copolymers, block copolymers and random copolymers.

In another embodiment, the polymeric substrate can alternatively be an inorganic-organic hybrid polymer or a blend of organic polymer and inorganic-organic hybrid material. Inorganic-organic hybrid polymers can be prepared by conventional methods from the prior art.

In a particular embodiment, the polymeric substrate of the present invention comprises one or more layers, such as one or more layers of different polymers. In a particular embodiment, the expression "one or more layers" refers to 1, 2, 3, 4, 5 or more polymeric layers; preferably refers to between 1 and 5 polymeric layers; more preferably refers to 1 or 2 polymeric layers. In an embodiment, each layer of the polymeric substrate has a thickness of at least 0.5 microns; preferably of at least 1 micron; preferably of between 1 and 250 µm, more preferably between 2 and 100 µm, even more preferably between 10 and 70 µm; even much more preferably of about 50 µm. In another embodiment, the polymeric substrate of the present invention is porous; preferably having macro porosity or microporosity as known in the art.

In a particular embodiment, the polymeric substrate of the present invention is in the form of spheres, cylinders, lamellae, films, fibers and bicontinuous structures; preferably it is a polymeric fiber.

In an embodiment, the polymeric substrate has a thickness of at least 1 micron; preferably of between 1 and 250 µm, more preferably between 1 and 100 µm, even more preferably between 1 and 50 µm. In another embodiment, the polymeric substrate has a length between 0.5 and 40 cm, preferably between 0.5 and 20 cm, more preferably between 1 and 10 cm, even more preferably between 1 and 8 cm.

In an embodiment, the polymeric substrate is a polymeric fiber with a diameter of between 1 and 100 µm, preferably between 1 and 50 µm, more preferably between 2 and 30 µm, even more preferably between 5 and 20 µm. In another embodiment, the polymeric substrate is a polymeric fiber with a diameter of between 1 and 100 µm, preferably between 2 and 20 µm, and a length between 0.5 and 40 cm, preferably between 0.5 and 10 cm.

### Halogen

The polymeric substrate and/or the infiltrated layer within the polymeric substrate, comprises a halogen. In an embodiment, the halogen of the self-healing organic-inorganic material of the invention is selected from a chlorine, fluorine, Iodine, bromine or a mixture thereof; preferably is chlorine.

The halogen comprised in the infiltrated layer may be:(a) part of an organic compound such as a precursor comprising an halogen, for example thionyl chloride, malonyl chloride, terephthaloyl chloride or diacyl chloride; and/or (b) an halogen-containing compound of the metal, semimetal or semiconductor element such as an halide, oxyhalide or an hydroxyhalide of said metal, semimetal or semiconductor element and/or (c) part of a functional group in the polymer substrate such as CI- group in polyvinyl chloride (PVC) or in Parylene C.

The halogen comprised in the polymeric substrate, may be (a) part of a halogen-containing compound of the metal, semimetal or semiconductor element such as an halide, oxyhalide or an hydroxyhalide of said metal, semimetal or semiconductor element and/or may be (b) a functional group in the polymer substrate such as CI- group in polyvinyl chloride (PVC) or in Parylene C.

### Coating layer.

The self-healing organic-inorganic material of the invention comprises a coating layer directly on the surface of the polymeric substrate (i.e. the coating layer is in direct contact with the surface of the polymeric substrate).

In a particular embodiment the coating layer covers partially or totally the surface of the polymeric substrate. In a more particular embodiment, the coating layer covers at least a 20% of the surface of the polymeric substrate; preferably at least a 50% of the surface of the polymeric substrate; more preferably at least a 90%; even much more preferably at least a 99%. In a more particular embodiment, the coating layer covers between a 20 and a 99% of the surface of the polymeric substrate.

In a particular embodiment the coating layer has a thickness of at least 1 nm, 5 nm, 10 nm, 15 nm, 20 nm, 25 nm, 30 nm or 50 nm; preferably at least 100 nm; more preferably at least 200 nm.

In a particular embodiment, the coating layer of the present invention has a thickness of between 1 and 500 nm; preferably between 5 and 200 nm; more preferably between 10 and 150 nm.

In a particular embodiment, the coating layer comprises a halogen.

In another embodiment, the coating layer comprises one or more coating layers on top of it (on the surface of the coating layer); preferably comprises one layer directly on its surface.

In a particular embodiment, the coating layer is chemically functionalized. In a particular embodiment, the coating layer is not continuous. In a particular embodiment, the coating layer is continuous. In a particular embodiment, the coating layer is porous.

In a more particular embodiment the coating layer comprises an oxide of the at least a metal, semimetal or semiconductor element. In an even more particular embodiment the coating layer consist of an oxide of the at least a metal, semimetal or semiconductor element.

### Infiltrated layer

The self-healing organic-inorganic material of the invention comprises an infiltrated layer within the polymeric substrate. In the context of the present invention the term "infiltrated layer" is similar to "infiltration layer". As explained in detail in the description of the process for the preparation of the self-healing organic-inorganic material of the invention, the infiltrated layer corresponds to the polymeric substrate wherein the metal, semimetal or semiconductor element has penetrated into said polymeric substrate. Also the halogen, if not originally present in the polymeric substrate, is infiltrated into said polymeric substrate forming an infiltrated layer. This means that the infiltration layer is a polymeric material as defined above comprising the metal, semimetal or semiconductor element and the halogen physically or chemically binding to at least part of the available functional groups in the subsurface of said polymeric material, i.e. infiltrating said polymeric substrate. In an embodiment, the infiltration layer of the self-healing organic-inorganic material is situated directly below the surface of the polymeric substrate, in contact with that surface and preferably extends to the interior of said polymeric substrate; in particular, the thickness of the infiltration layer is measured from the surface of the polymeric substrate.

In a particular embodiment the infiltration layer has a thickness of at least 1 nm, 5 nm, 10 nm, 15 nm, 20 nm, 25 nm, 30 nm or 50 nm; preferably at least 100 nm; more preferably at least 200 nm.

In a particular embodiment, the infiltrated layer of the present invention has a thickness of between 1 and 500 nm; preferably between 5 and 200 nm; more preferably between 10 and 150 nm.

In a particular embodiment, the infiltrated layer within the polymeric substrate comprises a halogen. In a more particular embodiment, only the infiltrated layer comprises a halogen within the polymeric substrate (i.e. the rest of the polymeric substrate does not comprise a halogen).

### A metal, semimetal or semiconductor element

The coating layer and the infiltrated layer of the self-healing organic-inorganic material of the invention comprise at least a metal, semimetal or semiconductor element.

The coating layer and the infiltrated layer of the self-healing organic-inorganic material of the invention comprise the same at least one metal, semimetal or semiconductor element.

In the context of the present invention the term "metal" refers to what is commonly understood in the art, and includes earth metals, alkaline earths, transition metals, lanthanides, actinides and other metals such as B, Al, Ga, In, Tl, Nh, Sn, Pb, FI, Mc and Lv. In the context of the present invention, the term "semimetal" or metalloid refers to what is commonly understood in the art and includes As, Sb, Te, Se and Bi. In the context of the present invention, the term "semiconductor" refers to what is commonly understood in the art and includes Ge and Si.

In a particular embodiment, the metal, semimetal or semiconductor element is selected from Al, Zn, Si, Ti, W, Sb, As, Ba, Bi, B, Cd, Ca, Ce, Cr, Co, Cu, Er, Eu, Gd, Ga, Ge, Hf, Fe, La, Mg, Mn, Mo, Ni, Nb, Os, Pt, Pr, Re, Rh, Ru, Sm, Se, Si, Sr, Ta, Te, Tb, Tm, Sn, Ti, W, V, Yb, Y, Zr, Pd, In, Ir, Li, and mixtures thereof; preferably selected from In, Zn, Al, As, Bi, B, Ca, Cr, C

o, Cu, Ga, Ge, Hf, Fe, La, Mg, Mn, Mo, Ni, Pt, Re, Sb, Si, Se, Ti, Ta, Te, Tm, Sn, W, V, Y, Zr, Li and mixtures thereof; more preferably selected from In, Zn, Al, Si, Ti and mixtures thereof; more preferably is Zn or In.

In an embodiment, the coating and/or infiltrated layer comprises an oxides, nitrides, halides, sulfides, phosphides, phosphates, salts, halogen-containing organic compounds or mixtures thereof of the metal, semimetal or semiconductor element; preferably oxides, nitrides, halogen-containing organic compounds or mixtures thereof of the metal, semimetal or semiconductor element.

Non-limiting examples of compounds that might be at the coating and/or infiltrated layer are Li₂O, Li₂S, Li₃N, LiF, BeO, B₂O₃, BN, MgF₂, MgO, Al₂O₃, Al₂S₃, AlF₃, AIN, AlP, SiO₂, CuCl, CaF₂, CaO, CaS, TiN, TiO₂, TiS₂, V₂O₃, VN, VO₂, VSₓ, CrOₓ, Mn₅O₈, MnF₂, MnOₓ, MnS, FeNₓ, FeOₓ, FeS₂, Co₃O₄, CoO, CoNₓ, Ni₃N, NiO, NiS, CU₂O, Cu₃N, CuCl, CuO, CuSₓ, Zn₃N₂, ZnF₂, ZnO, ZnS, Ga₂O₃, GaN, GaP, GaSₓ, GeO₂, GeSₓ, SrF₂, SrO, SrS, Y₂O₃, YF₃, ZrF₄, ZrNₓ, ZrO₂, ZrS₂, Nb₂O₅, NbN, MoNₓ, MoO₃, RuO₂, Rh₂O₃, PdO, AgO₂, CdO, CdS, In₂O₃, In₂S₃, InN, SnNₓ, SnO, SnO₂, SnS₂, Sb₂O₅, Sb₂S₃, BaO, BaS, Ba(OH)₂, La₂O₃, La₂S₃, LaF₃, CeO₂, PrOₓ, Nd₂O₃, Sm₂O₃, Eu₂O₃, Gd₂O₃, TbF₃, Dy₂O₃, HO₂O₃, Er₂O₃, Tm₂O₃, Yb₂O₃, Lu₂O₃, HfF₄, HfNₓ, HfO₂, HfS₂, Ta₂O₅, TaNₓ, TaOₓ, WNₓ, WO₃, WS₂, IrO₂, PtOₓ, PbO₂, PbS, Bi₂O₃, Bi₂S₃, BiOCl and combinations thereof; wherein X and Y are integers between 0.1 and 6.

In a particular embodiment, the coating and/or infiltrated layer comprises an oxide, nitride, halide, sulfide, halogen-containing organic compound of the metal, semimetal or semiconductor element or mixtures thereof; preferably oxide, halogen-containing organic compound of the metal, semimetal or semiconductor element or mixtures thereof. Non-limiting examples of oxides that may be present at the coating and/or infiltrated layer are In₂O₃, ZnO, Al₂O₃, SiO₂, TiO₂ and mixtures thereof. Non-limiting examples of halides that may be present at the coating and/or infiltrated layer are indium chloride, zinc chloride, aluminium chloride, silicon chloride, titanium chloride and mixtures thereof.

In a more particular embodiment, the coating layer consist of an oxide, nitride, halide, sulfide or mixtures thereof of the metal, semimetal or semiconductor element or mixtures thereof; preferably an oxide of the metal, semimetal or semiconductor element.

In another embodiment, the coating layer and the infiltrated layer comprise an oxide of the metal, semimetal or semiconductor element.

In a more particular embodiment, the infiltrated layer comprises a halogen-containing compound of the metal, semimetal or semiconductor element. The halogen-containing compound of the metal, semimetal or semiconductor element may be an halide, oxyhalide, an hydroxyhalide, an halogen-containing organic compound of said metal, semimetal or semiconductor element or a mixture thereof.

In a particular embodiment, the halogen-containing compound of the metal, semimetal or semiconductor element of the infiltration layer is an halide, oxyhalide or hydroxyhalide of the metal, semimetal or semiconductor element; preferably is a chloride, oxychloride or hydroxychloride of the metal, semimetal or semiconductor element; more preferably wherein the metal, semimetal or semiconductor element is selected from In, Zn, Al, Si, Ti and mixtures thereof.

In a particular embodiment, the halogen-containing compound of the metal, semimetal or semiconductor element form inclusions in the infiltration layer.

In a particular embodiment, the halogen-containing compound of the metal, semimetal or semiconductor element is homogeneously distributed through all the thickness of the infiltration layer.

In an embodiment, the infiltrated layer comprises a mixture of:
- an oxide of the metal, semimetal or semiconductor element, and
- an halogen-containing compound of the metal, semimetal or semiconductor element.

In a more particular embodiment, the coating layer and/or the infiltrated layer comprise an oxide of the metal, semimetal or semiconductor element; wherein the metal, semimetal or semiconductor element is selected from In, Zn, Al, Si, Ti and mixtures thereof.

In an embodiment, the amount of the at least a metal, semimetal or semiconductor element of the infiltrated layer is not constant in all the thickness of the infiltrated layer; particularly, said amount is reduced from the top to the bottom of the infiltrated layer, being the top of the infiltrated layer in contact with the coating layer.

In a more particular embodiment, the infiltrated layer comprise an oxide of the metal, semimetal or semiconductor element; particularly, the amount of the at least a metal, semimetal or semiconductor oxide of the infiltrated layer is not constant in all the thickness of the infiltrated layer; more particularly said amount is reduced from top to the bottom of the infiltrated layer, being the top of the infiltrated layer in contact with the coated layer.

In a more particular embodiment, the infiltrated layer comprises an halogen-containing compound of the metal, semimetal or semiconductor element; particularly the amount of the halogen-containing compound of the metal, semimetal or semiconductor element of the infiltrated layer is not constant in all the thickness of the infiltrated layer; more particularly said amount increases from top to the bottom of the infiltrated layer, being the top of the infiltrated layer in contact with the coated layer.

In a particular embodiment, the self-healing organic-inorganic material comprises:
- a polymeric substrate selected from organosilicon polymers, polyurethane, polyamides, polyxylylenes, parlylenes, polyamines, polyimides, polyalkylenes, polyacrylates, polymethacrylates, polyalcohols, polyethers, polyesters, polyvinyls, polyvinylidenes, halopolymers, polypyrroles, polythiophenes, polystyrenes and polyketones and mixtures thereof,
- a coating layer directly on the surface of the polymeric substrate, and
- an infiltrated layer within the polymeric substrate;

wherein the coating layer and the infiltrated layer comprise at least a metal, semimetal or semiconductor element selected from In, Zn, Al, Si, and/or Ti;
wherein said at least a metal, semimetal or semiconductor element is the same in the coating and in the infiltrated layer; and
wherein the polymeric substrate and/or the infiltrated layer within the polymeric substrate, comprises a halogen;
preferably wherein the infiltrated layer comprises a halogen-containing compound of the metal, semimetal or semiconductor element selected from an halide, oxyhalide, an hydroxyhalide, an halogen-containing organic compound of said metal, semimetal or semiconductor element or a mixture thereof.
In a particular embodiment, the self-healing organic-inorganic material comprises:
- a polymeric substrate selected from organosilicon polymers, polyurethane, polyamides, polyxylylenes, parlylenes, polyamines, polyimides, polyalkylenes, polyacrylates, polymethacrylates, polyalcohols, polyethers, polyesters, polyvinyls, polyvinylidenes, halopolymers, polypyrroles, polythiophenes, polystyrenes and polyketones and mixtures thereof,
- a coating layer directly on the surface of the polymeric substrate, and
- an infiltrated layer within the polymeric substrate;

wherein the coating layer and the infiltrated layer comprise at least a metal, semimetal or semiconductor element selected from In, Zn, Al, Si, and/or Ti;
wherein said at least a metal, semimetal or semiconductor element is the same in the coating and in the infiltrated layer; and
wherein the polymeric substrate and/or the infiltrated layer within the polymeric substrate, comprises a halogen;
wherein the infiltrated layer comprises a halogen-containing compound of the metal, semimetal or semiconductor element selected from an halide, oxyhalide, an hydroxyhalide, an halogen-containing organic compound of said metal, semimetal or semiconductor element or a mixture thereof; and
wherein the coating and the infiltrated layer comprise oxides, nitrides, halides, sulfides, phosphides, phosphates, salts, halogen-containing organic compounds or mixtures thereof of the metal, semimetal or semiconductor element.
In a more particular embodiment, the self-healing organic-inorganic material comprises:
- a polymeric substrate selected from organosilicon polymers, polyurethane, polyamides, polyxylylenes, parlylenes, polyamines, polyimides, polyalkylenes, polyacrylates, polymethacrylates, polyalcohols, polyethers, polyesters, polyvinyls, polyvinylidenes, halopolymers, polypyrroles, polythiophenes, polystyrenes and polyketones and mixtures thereof,
- a coating layer directly on the surface of the polymeric substrate, and
- an infiltrated layer within the polymeric substrate;

wherein the coating layer and the infiltrated layer comprise at least a metal, semimetal or semiconductor element selected from In, Zn, Al, Si, and/or Ti;
wherein said at least a metal, semimetal or semiconductor element is the same in the coating and in the infiltrated layer; and
wherein the polymeric substrate and/or the infiltrated layer within the polymeric substrate, comprises a halogen;
wherein the infiltrated layer comprises a halogen-containing compound of the metal, semimetal or semiconductor element selected from an halide, oxyhalide, an hydroxyhalide, an halogen-containing organic compound of said metal, semimetal or semiconductor element or a mixture thereof; and
wherein the coating and the infiltrated layer comprise an oxide of the metal, semimetal or semiconductor element.

### Process for the preparation of self-healing organic-inorganic materials

A second aspect of the invention is directed to a process for the preparation of self-healing organic-inorganic materials, comprising the steps of:
i) providing a polymeric substrate in a reaction chamber;
ii) if the polymeric substrate does not comprises a halogen, pulsing a precursor comprising an halogen into the reaction chamber followed by an exposure time and then, purging of the reaction chamber,
   to obtain the polymeric substrate of step (i) infiltrated and optionally coated;
iii) pulsing a precursor comprising a metal, semimetal or semiconductor element into the reaction chamber followed by an exposure time and then, purging of the reaction chamber; and
   pulsing a co-reactant into the reaction chamber followed by an exposure time and then purging of the reaction chamber, wherein the co-reactant reacts with at least part of precursor comprising a metal, semimetal or semiconductor element, to obtain the polymeric substrate of step (i) or of step (ii) coated and infiltrated;
wherein the exposure time between the pulsing and the purging of step (ii) and/or of step (iii) is at least 5 seconds.
In an embodiment, the process for the preparation of self-healing organic-inorganic materials, consist of the steps of:
i) providing a polymeric substrate in a reaction chamber;
ii) if the polymeric substrate does not comprise a halogen, pulsing a precursor comprising an halogen into the reaction chamber followed by an exposure time and then, purging of the reaction chamber,
   to obtain the polymeric substrate of step (i) infiltrated and optionally coated;
iii) pulsing a precursor comprising a metal, semimetal or semiconductor element into the reaction chamber followed by an exposure time and then, purging of the reaction chamber; and
   pulsing a co-reactant into the reaction chamber followed by an exposure time and then purging of the reaction chamber, wherein the co-reactant reacts with at least part of precursor comprising a metal, semimetal or semiconductor element, to obtain the polymeric substrate of step (i) or of step (ii) coated and infiltrated;
wherein the exposure time between the pulsing and the purging of step (ii) and/or of step (iii) is at least 5 seconds; and
(iv) optionally, repeating steps (ii) and/or (iii).

Each step of the process can be independently repeated a desired number of times, for example until the desired thickness (of the coating and/or infiltration layers) is achieved; in particular at least 10 times; more particularly at least 100 times. The number of repetitions of each step may be the same or different.

### Step (i)

In a particular embodiment, the reaction chamber of the present invention is arranged for gas-to-surface reactions. Preferably, the expression "reaction chamber" refers to the chamber of a chemical vapor processing apparatus as known in the art such as a chemical vapor deposition (CVD), vapor phase infiltration (VPI) or atomic layer deposition (ALD) apparatus. Preferably the reaction chamber of the present invention is an atomic layer deposition reaction chamber such as those available from Cambridge Nanotech Inc. of Cambridge, Mass. In an embodiment, the reaction chamber is an atomic layer deposition chamber.

The polymeric substrate of step (i) of the process of the present invention may have all the characteristics as described above for the polymeric substrate of the self-healing organic-inorganic material of the invention in any of its particular embodiments.

### Step (ii)

Step (ii) of the process of the present invention comprises pulsing a precursor comprising a halogen into the reaction chamber followed by an exposure time and then, purging of the reaction chamber, to obtain the polymeric substrate of step (i) infiltrated and optionally coated, when the polymeric substrate does not comprise a halogen element in its composition.

In the context of the present invention, the term "precursor" refers to a compound from which another compound is optionally formed.

The precursor comprising a halogen penetrates the surface of the polymeric substrate and may bind to at least part of the available functional groups in the subsurface of said polymeric substrate, thus infiltrating said polymeric substrate. Said precursor may also bind to the surface of said polymeric substrate, coating at least partially said polymeric substrate.

All the reagents used in the process of the invention (for example, the precursor comprising an halogen, the precursor comprising a metal, semimetal or semiconductor element, the co-reactant and the purge gas) may be injected or pulsed in the reaction chamber in the form of vapor or gas.

In the context of the present invention the term "pulse" is related to the period of time wherein a compound such as a metal, semimetal or semiconductor precursor, a precursor comprising an halogen, an organic molecule, water or any other reactant or co-reactant is dosed into the reaction chamber. In this sense, the term "pulsing" refers to dosing a compound into the reaction chamber of the present invention during a (short) period of time. The pulsing time may be adapted by the expert in the art lasting from a few hundredths of a second to several seconds, depending on the precursor, type of reactor, volume of the chamber, etc.

In a particular embodiment, pulsing times are independently between 0.01 and 20 seconds; preferably between 0.01 and 10 seconds, more preferably between 0.01 and 5 seconds, even more preferably between 0.01 and 2 seconds. In a further embodiment, pulsing times are independently between 0.01 and 1 second, preferably between 0.02 and 0.80 seconds, more preferably between 0.02 and 0.6 seconds; even more preferably between 0.05 and 0.5 seconds.

In the context of the present invention the term "exposure time" is related to the period of time or "hold" time wherein a static atmosphere or a non-flowing atmosphere inside the chamber is created and a compound or a mixture of compounds previously introduced in the chamber (by one or more pulses) are able to diffuse into the sub-surface of the polymeric substrate. Exposure time may be adapted by the expert in the art depending on the polymeric substrate characteristics, precursor, density of the polymeric substrate, desired infiltration depth, etc. It may last from a few seconds to a few minutes. In special cases it may last for hours. As used in the art, exposure time generally refers to the time between the end of pulsing and the start of purging.

In a particular embodiment, exposure times are at least 5 seconds; preferably at least 10 seconds; even more preferably at least 20 seconds.

In a particular embodiment, exposure times are between 5 and 300 seconds; more preferably between 1 and 200 seconds, even more preferably between 5 and 200 seconds. In a further embodiment, exposure times are between 5 and 150 second, preferably between 5 and 90 seconds, more preferably between 10 and 60 seconds; even more preferably between 20 and 40 seconds.

In the context of the present invention the term "purge" is related to the period of time wherein any non-reacted compound in the reaction chamber is removed. The purging time may be adapted by the expert in the art depending on the precursor, reaction chamber characteristics, pulsing time, etc. and may last from a few seconds to several minutes per cycle. In a particular embodiment, the purging of the present invention is performed by flowing a purge gas through the said reaction chamber or by evacuating said reaction chamber by means of vacuum; preferably by flowing an inert purge gas. In an embodiment, the inert purge gas is selected from nitrogen, argon, helium, neon, and mixtures thereof; preferably it is nitrogen.

In a particular embodiment, purging times are at least 5 seconds; preferably at least 10 seconds; even more preferably at least 20 seconds; even much more preferably at least 40 s.

In a particular embodiment, purging times are between 5 and 300 seconds; more preferably between 1 and 200 seconds, even more preferably between 5 and 200 seconds. In a further embodiment, exposure times are between 5 and 150 second, preferably between 5 and 90 seconds, more preferably between 10 and 80 seconds; even more preferably between 15 and 70 seconds.

In a particular embodiment, the precursor comprising an halogen is an organic or inorganic compound comprising an halogen selected from chlorine, fluorine, Iodine, bromine or a mixture thereof; preferably chlorine, fluorine, or bromine; more preferably chlorine.

In a particular embodiment, the precursor comprising a halogen is an organic or inorganic compound comprising a halogen. In a more particular embodiment, the inorganic compound comprising a halogen is a hydrogen halide such as hydrogen chloride, a phosphoryl halide such as phosphoryl chloride, a metal halide or mixtures thereof. Metal halide suitable as precursor comprising an halogen can be selected from those having a metal element selected from Al, Si, P, Ti, V, Cr, Mn, Cu, Zn, Ga, Ge, Zr, Nb, Mo, Cd, In, Sn, Sb, Hf, Ta, W, Pb and mixtures thereof.

In a more particular embodiment the organic compound comprising a halogen is an acyl halide. Non-limiting examples of acyl halides suitable as a precursors comprising a halogen are malonyl chloride, diacyl chloride, terephthaloyl chloride or mixtures thereof.

In a more particular embodiment, the precursor comprising a halogen comprises a sulfoxide group; preferably a thionyl group; more preferably thionyl chloride.

In a more particular embodiment, the precursor comprising a halogen is selected from hydrogen halides, phosphoryl halides, acyl halides, thionyl halides or mixtures thereof.

In a particular embodiment, the polymeric substrate of step (i) is infiltrated and optionally coated in step (ii) by the precursor comprising an halogen.

### Step (iii)

Step (iii) of the process of the present invention comprises:
- pulsing a precursor comprising a metal, semimetal or semiconductor element into the reaction chamber followed by an exposure time and then, purging of the reaction chamber; and
- pulsing a co-reactant into the reaction chamber followed by an exposure time and then purging of the reaction chamber, wherein the co-reactant reacts with at least part of precursor comprising a metal, semimetal or semiconductor element,
to obtain the polymeric substrate of step (i) or of step (ii) coated and infiltrated.

In an embodiment, the precursor comprising a metal, semimetal or semiconductor element penetrates the surface of the polymeric substrate and binds to at least part of the available functional groups in the subsurface of said polymeric substrate, thus infiltrating said polymeric substrate. In addition, the precursor comprising a metal, semimetal or semiconductor element penetrates the surface of the polymeric substrate and binds to at least part of the precursor comprising an halogen Said precursor comprising a metal, semimetal or semiconductor element may also bind the surface of said polymeric substrate, coating said polymeric substrate.

The pulsed co-reactant (s) may react with at least part of the metal, semimetal or semiconductor containing precursors creating infiltrated metal, semimetal or semiconductor compounds. Said co-reactant may also react with at least part of the metal, semimetal or semiconductor containing precursors on the surface of said polymeric substrate, coating said polymeric substrate with metal, semimetal or semiconductor compounds.

In a particular embodiment, the precursor comprising a metal, semimetal or semiconductor element of the present invention is selected from metal halides, metal alkoxides, metal alkyls, metal diketonates, metal alkylamides, metal amidinates, metal aryls and cyclopentadienyl metals; preferably are independently selected from metal halides and metal alkoxides; more preferably from metal alkoxides.

The metal, semimetal or semiconductor element of the precursor of step (iii) may have all the characteristics as described above for metal, semimetal or semiconductor element of the self-healing organic-inorganic material of the invention in any of its particular embodiments.

Non-limiting examples of the precursor comprising a metal, semimetal or semiconductor element suitable for the present invention are trimethylaluminum, triisobutylaluminum, aluminum tris(2,2,6,6-tetramethyl-3,5-heptanedionate), tris(dimethylamido)aluminum, aluminum trichloride, triphenylantimony, tris(dimethylamido)antimony, antimony pentachloride, triphenylarsine, triphenylarsine oxide, barium bis(2,2,6,6-tetramethyl-3,5-heptanedionate), barium nitrate, bis(pentamethylcyclopentadienyl)barium, bis(triisopropylcyclopentadienyl)barium, bis(aceto-O)triphenylbismuth, tris(2-methoxyphenyl)bismuthine, triisopropyl borate, triphenylborane, tris(pentafluorophenyl)borane, cadmium acetylacetonate, dimethyl cadmium, calcium bis(2,2,6,6-tetramethyl-3,5-heptanedionate), tris(tetramethylcyclopentadienyl) cerium (III), bis(cyclopentadienyl)chromium (II), bis(pentamethylcyclopentadienyl)chromium (II), chromium (III) tris(2,2,6,6-tetramethyl-3,5-heptanedionate), bis(cyclopentadienyl)cobalt (II), bis(pentamethylcyclopentadienyl)cobalt (II), bis(ethylcyclopentadienyl)cobalt (II), cobalt tris(2,2,6,6-tetramethyl-3,5-heptanedionate), copper bis(2,2,6,6-tetramethyl-3,5-heptanedionate), copper bis(6,6,7,7,8,8,8,-heptafluoro-2,2-dimethyl-3,5-octanedioate), copper hexafluoroacetylacetonate, bis(N,N'-diisopropylacetamidinato)copper(I), erbium tris(2,2,6,6-tetramethyl-3,5-heptanedionate), tris(N,N-bis(trimethylsilyl)amide)europium (III), tris(tetramethylcyclopentadienyl)europium (III), tris(N, N-bis(trimethylsilyl)amide)gadolinium (III), tris(tetramethylcyclopentadienyl)gadolinium (III), tris(cyclopentadienyl)gadolinium (III), triethylgallium, trimethylgallium, tris(dimethylamido)gallium (III), hexamethyldigermanium (IV), tetramethylgermanium, tributylgermanium hydrige, triethylgermanium hydride, triphenylgermanium hydride, bis(methyl-η⁵-cyclopentadienyl)methoxymethylhafnium, bis(trimethylsilyl)amidohafnium(IV) chloride, d imethylbis(cyclopentadienyl)hafnium(IV), hafnium(IV) tert-butoxide, hafnium isopropoxide, etrakis(diethylamido)hafnium, etrakis(dimethylamido)hafnium, tetrakis(ethylmethylamido)hafnium(IV), [1,1'-bis(diphenylphosphino)ferrocene]tetracarbonylmolybdenum(0), bis(pentamethylcyclopentadienyl)iron(II), 1,1'-diethylferrocene, iron(0) pentacarbonyl, iron(III) tris(2,2,6,6-tetramethyl-3,5-heptanedionate), cyclohexadiene iron tricarbonyl, ferrocene, lanthanum(lll) isopropoxide, tris (N,N-bis(trimethylsilyl)amide)lanthanum(III), tris(cyclopentadienyl)lanthanum (III), tris(tetramethylcyclopentadienyl)lanthanum (III), tris(isopropylcyclopentadienyl)lanthanum(III), bis(cyclopentadienyl)magnesium (II), bis(pentamethylcyclopentadienyl)magnesium, bis(pentamethylcyclopentadienyl)manganese (II), bis(tetramethylcyclopentadienyl)manganese (II), bromopentacarbonylmanganese(I), cyclopentadienylmanganese(I) tricarbonyl, manganese(0) carbonyl, (bicyclo[2.2.1]hepta-2,5-diene)tetracarbonylmolybdenum(0), bis(cyclopentadienyl)molybdenum(IV) dichloride, cyclopentadienylmolybdenum(ll) tricarbonyl, molybdenumhexacarbonyl, (propylcyclopentadienyl)molybdenum(I) tricarbonyl dimer, molybdenum hexafluoride, allyl(cyclopentadienyl)nickel(ll), bis(cyclopentadienyl)nickel(ll), bis(ethylcyclopentadienyl)nickel(II), bis(triphenylphosphine)nickel(II) dichloride, nickel(II) bis(2,2,6,6-tetramethyl-3,5-heptanedionate), nickel(II) acetylacetonate, bis(cyclopentadienyl)niobium(IV) dichloride, niobium pentafluoride, niobium pentachloride, niobium pentethoxide, niobium(V) iodide, triosmium dodecacarbonyl, trimethyl(methylcyclopentadienyl)platinum(IV), praseodymium(III) hexafluoroacetylacetonate, dirhenium decacarbonyl, (acetylacetonato)(1,5-cyclooctadiene)rhodium(I), bis(cyclopentadienyl)ruthenium(II), bis(ethylcyclopentadienyl)ruthenium(II), triruthenium dodecacarbonyl, tris(tetramethylcyclopentadienyl)samarium(III), dimethyl selenide, (3-aminopropyltriethoxysilane, *N*-*sec*-butyl(trimethylsilyl)amine, chloropentamethyldisilane, 1,2-dichlorotetramethyldisilane, 1,3-diethyl-1,1,3,3-tetramethyldisilazane, dodecamethylcyclohexasilane, hexamethyldisilane, hexamethyldisilazane, 2,4,6,8,10-pentamethylcyclopentasiloxane, pentamethyldisilane, silicon tetrabromide, silicon tetrachloride, tetraethylsilane, 2,4,6,8-tetramethylcyclotetrasiloxane, 1,1,2,2-tetramethyldisilane, *N*,*N'*,*N"*-tri-*tert*-butylsilanetriamine, tris(*tert*-butoxy)silanol, tris(*tert-*pentoxy)silanol, disilane, strontium tetramethylheptanedionate, bis(pentamethylcyclopentadienyl) strontium, pentakis(dimethylamino)tantalum(V), tantalum(V) ethoxide, tris(diethylamido)(tert-butylimido)tantalum(V), tris(ethylmethylamido)(tert-butylimido)tantalum(V), tellurium tetrachloride, terbium(III) tris(2,2,6,6-tetramethyl-3,5-heptanedionate), tris(cyclopentadienyl)terbium(lll), tris(tetramethylcyclopentadienyl)terbium(III), tris(N,N-bis(trimethylsilyl)amide)thulium(III), tris(cyclopentadienyl)thulium(III), bis[bis(trimethylsilyl)amino]tin(II), hexaphenylditin(IV), tetraallyltin, tetrakis(diethylamido)tin, tetrakis(dimethylamido)tin, tin(IV) iodide, tetramethyltin, tetravinyltin, tin(II) acetylacetonate, trimethyl(phenylethynyl)tin, trimethyl(phenyl)tin, tetrakis(diethylamido)titanium(IV), tetrakis(dimethylamido)titanium(IV), tetrakis(ethylmethylamido)titanium(IV), titanium(IV) diisopropoxide bis(2,2,6,6-tetramethyl-3,5-heptanedionate), titanium(IV) isopropoxide, titanium tetrachloride, bis(*tert-*butylimino)bis(*tert*-butylamino)tungsten, bis(*tert-*butylimino)bis(dimethylamino)tungsten(VI), bis(cyclopentadienyl)tungsten(IV) dichloride, bis(cyclopentadienyl)tungsten(IV), tungsten hexafluoride, bis(isopropylcyclopentadienyl)tungsten(IV), tetracarbonyl(1,5-cyclooctadiene)tungsten(0), triamminetungsten(IV) tricarbonyl, tungsten hexacarbonyl, bis(cyclopentadienyl)vanadium(II), bis(ethylcyclopentadienyl)vanadium(ll), vanadium(V) oxytriisopropoxide, tris(N,N-bis(trimethylsilyl)amide)ytterbium(III), tris(cyclopentadienyl)ytterbium(III), tris(N,N-bis(trimethylsilyl)amide)yttrium, tris(butylcyclopentadienyl)yttrium(lll), tris(cyclopentadienyl)yttrium(III), yttrium 2-methoxyethoxide, yttrium(lll) tris(isopropoxide), yttrium(lll) tris(2,2,6,6-tetramethyl-3,5-heptanedionate), bis(pentafluorophenyl)zinc, bis(2,2,6,6-tetramethyl-3,5-heptanedionate)zinc(II), diethylzinc (DEZ), dimethylzinc, diphenylzinc, bis(cyclopentadienyl)zirconium(IV), bis(cyclopentadienyl)dimethylzirconium, bis(methyl-η⁵-cyclopentadienyl)methoxymethylzirconium, dimethylbis(pentamethylcyclopentadienyl)zirconium(IV), tetrakis(diethylamido)zirconium(IV), tetrakis(dimethylamido)zirconium(IV), tetrakis(ethylmethylamido)zirconium(IV), zirconium(IV) dibutoxide(bis-2,4-pentanedionate), zirconium(IV) 2-ethylhexanoate, zirconium tetrakis(2,2,6,6-tetramethyl-3,5-heptanedionate), palladium (II) hexafluoroacetylacetonate, cyclopentadienyl indium, trimethyl indium (TMIn), iridium (III) acetylacetonate, lithium tert-butoxide and mixtures thereof.

In a preferred embodiment, the precursor comprising a metal, semimetal or semiconductor element of the present invention is selected from cyclopentadienyl indium, trimethyl indium(TMIn), bis(pentafluorophenyl)zinc, bis(2,2,6,6-tetramethyl-3,5-heptanedionate)zinc(II), diethylzinc, diphenylzinc, trimethylaluminum, triisobutylaluminum, aluminum tris(2,2,6,6-tetramethyl-3,5-heptanedionate), tris(dimethylamido)aluminum, aluminum trichloride, (3-aminopropyl)triethoxysilane, N-sec-butyl(trimethylsilyl)amine, chloropentamethyldisilane, 1,2-dichlorotetramethyldisilane, 1,3-diethyl-1,1,3,3-tetramethyldisilazane, dodecamethylcyclohexasilane, hexamethyldisilane, hexamethyldisilazane, 2,4,6,8,10-pentamethylcyclopentasiloxane, pentamethyldisilane, silicon tetrabromide, silicon tetrachloride, tetraethylsilane, 2,4,6,8-tetramethylcyclotetrasiloxane, 1,1,2,2-tetramethyldisilane, *N,N',N"*-tri-*tert-*butylsilanetriamine, tris(*tert*-butoxy)silanol, tris(*tert*-pentoxy)silanol, disilane,tetrakis(diethylamido)titanium(IV), tetrakis(dimethylamido)titanium(IV), tetrakis(ethylmethylamido)titanium(IV), titanium(IV) diisopropoxide bis(2,2,6,6-tetramethyl-3,5-heptanedionate), titanium(IV) isopropoxide, titanium tetrachloride and mixtures thereof.

In a more preferred embodiment, the precursor comprising a metal, semimetal or semiconductor element of the present invention is selected from cyclopentadienyl indium, trimethyl indium (TMIn), bis(pentafluorophenyl)zinc, bis(2,2,6,6-tetramethyl-3,5-heptanedionate)zinc(II), diethylzinc, dimethylzinc, diphenylzinc and mixtures thereof.

The term "co-reactant" refers to a compound that activates the precursor comprising a metal, semimetal or semiconductor element, modifies the precursor, or catalyzes a reaction of the metal, semimetal or semiconductor element of the precursor, to convert it into the desired metal, semimetal or semiconductor compound or element that incorporates into the polymeric substrate to form either a coating layer or an infiltration layer. Suitable co-reactants are well-known in the art.

In a particular embodiment the co-reactant is selected from an oxygen source, a hydrogen source, a sulfur source and a nitrogen source; preferably an oxygen source. In a more particular embodiment the co-reactant of step (iv) or step (v) is selected from H₂O, O₂, O₃, hydrogen, BH₃, B₂H₆, H₂S, a metal hydride, NH₃ and a hydrazine; preferably is H₂O, O₂ or O₃; more preferably is H₂O.

In a particular embodiment, the co-reactant of step (iii) reacts with the at least part of precursor comprising a metal, semimetal or semiconductor element to provide a metal, semimetal or semiconductor compound or element independently selected from a metal oxide, a metal nitride, metal sulfide and a zero valent metal; preferably a metal oxide.

In a more particular embodiment, the co-reactant of step (iii) reacts with at least a 10 wt% of the total amount of the precursor comprising a metal, semimetal or semiconductor element; preferably with at least a 20 wt%.

In a particular embodiment, the process or some of the steps of the process of the present invention is performed at a temperature of between 25 and 350°C; preferably at between 75 and 300°C, more preferably of between 90 and 250°C. In an embodiment, the process or some of the steps of the process of the present invention is performed at a pressure of between 1 mbar and 1034 mbar; preferably between 100 mbar and 800 mbar; more preferably between 500 mbar and 700 mbar. In a more particular embodiment, the process or some of the steps of the process of the present invention is performed under a constant nitrogen gas flow of between 10 and 500 standard cubic centimeters per minute (sccm); preferably between 15 and 50 standard cubic centimeters per minute (sccm); more preferably at 20 standard cubic centimeters per minute (sccm).
In a particular embodiment, steps (ii) and (iii) of the process of the present invention are repeated; preferably wherein steps (ii) and (iii) are repeated a different number of times;
more preferably wherein the process comprises at least a cycle that consist of
   - repeating step (ii) a number of times "n"; and
   - repeating step (iii) a number of times larger than "n";
even more preferably wherein step (iii) is repeated between 2n and 20n number of times; preferably between 5n and 15n times.
In a more particular embodiment, the process of the present invention further comprises:
the pulsing time of step (ii) and/or step (iii) being between 0.1 and 100 seconds;
steps (ii) and (iii) being performed at a temperature of between 25 and 350°C;
the precursor of the metal, semimetal or semiconductor compound comprising the metal, semimetal or semiconductor element selected from In, Zn, Al, As, Bi, B, Ca, Cr, Co, Cu, Ga, Ge, Hf, Fe, La, Mg, Mn, Mo, Ni, Pt, Re, Sb, Si, Se, Ti, Ta, Te, Tm, Sn, W, V, Y, Zr and/or Li; preferably is selected from In, Zn, Al, Si, and/or Ti; more preferably is Zn or In; and
wherein the halogen is selected from a chlorine, fluorine, Iodine, bromine or a mixture thereof; preferably is chlorine.

### Product by process.

Another aspect of the present invention is directed to a self-healing organic-inorganic material obtainable by the process of the invention as described above in any of its particular embodiments. All the characteristics described above for the self-healing organic-inorganic material of the invention also apply to the self-healing organic-inorganic material obtainable by the process of the invention.

### Device

A further aspect of the invention is directed to a device comprising
- at least a layer of the self-healing organic-inorganic material of the invention in any of its particular embodiments;
- and an organic light-emitting device (OLED) comprising at least one electrode;
wherein the layer of the self-healing organic-inorganic material is coating the at least one electrode; preferably wherein the layer of the self-healing organic-inorganic material is in contact with the at least one electrode; more preferably wherein the electrode is a cathode.

In the context of the present invention the OLED may be any OLED known in the art such as an active-matrix organic light-emitting diode (AMOLED). In a particular embodiment, an OLED comprises an emissive layer sandwiched between two electrodes such as a cathode and an anode; preferably the emissive layer is organic.

In an embodiment, the device comprises at least two layers of the self-healing organic-inorganic material of the invention in any of its particular embodiments, wherein both of the layers are in contact with the OLED.

In a more particular embodiment, the OLED is completely encapsulated in the self-healing organic-inorganic material of the invention.

### Uses

Another aspect of the present invention is directed to the use of the self-healing organic-inorganic material of the invention, in the fabrication of electronic materials, optoelectronic materials, absorbent materials, personal safety equipment, sport equipment, construction and building materials, textiles, packaging, automotive and aircraft materials; preferably in the fabrication of polymeric transistors, capacitors, optoelectronic devices, barriers, absorbers, personal safety equipment, sport equipment, protective laminate, building materials, textiles, packaging, automotive and aircraft materials.

### EXAMPLES

The invention is illustrated by means of the following examples which in no case limit the scope of the invention.

### Example 1: Self-healing organic-inorganic material preparation

In the present example a Parylene C substrate was infiltrated by a VPI process with trimethylindium (TMIn) to obtain a self-healing organic-inorganic material.

Parylene C (ParC) is the generic name for poly(chloro-p-xylylene) polymer a thermoplastic, semi-crystalline polymer. ParyleneC substrates were purchased from Plasma Parylene Systems GmbH. The thickness of the polymer substrate was about 50 µm.

Indium oxide infiltration was performed by vapor phase infiltration (VPI) of trimethylindium (TMIn) and 30 % (in H₂O) of hydrogen peroxide in an atomic layer deposition (ALD) reactor (Savannah S100; Cambridge Nanotech Inc.). Water or ozone have also been successfully used as alternatives of hydrogen peroxide. Infiltration was carried out under a constant nitrogen gas flow of 20 standard cubic centimeters per minute (sccm). The reactor temperature was between 135 and 210°C.

A typical atomic layer deposition (ALD) process comprises at least a cycle consisting of Pulse/Purge/Pulse/Purge. On the contrary, in a VPI process, the substrate was exposed to the precursors for defined periods of time before purging, thereby allowing diffusion of the precursors into the substrate, for example using the following cycle: Pulse/Exposure/Purge/Pulse/Exposure/Purge. Thus, the technical difference of VPI over ALD is an additional exposure time after the precursor pulse, so that precursor has a longer residence time in the reactor. Said additional exposure time is achieved by closing the stop-valve before the vacuum pump of the ALD reactor.

An VPI cycle for infiltrating a ParyleneC substrate with trimethylindium (TMIn) was as follows: first, TMIn was pulsed for 0.4 s to the ALD reactor and left inside the chamber for additional 30 seconds to let the precursor infiltrate the polymeric substrate. This was followed by 60 seconds of purging time to evacuate unreacted precursor and by-products. The same steps were performed for H₂O₂ thus finishing one cycle. Thus, an VPI cycle for infiltrating a ParyleneC substrate with trimethylindium (TMIn) and H₂O₂ consisted of Pulse(TMIn, 0.4s)/ Exposure(30s)/ Purge(N₂, 60s)/ Pulse(H₂O₂, 0.4s)/ Exposure(30s)/ Purge(N₂, 60s). The total number of cycles was 150.

Different samples were obtained by performing the previous infiltrating process at different temperatures: 135°C, 140°C, 150°C, 170°C, 180°C and 210°C.

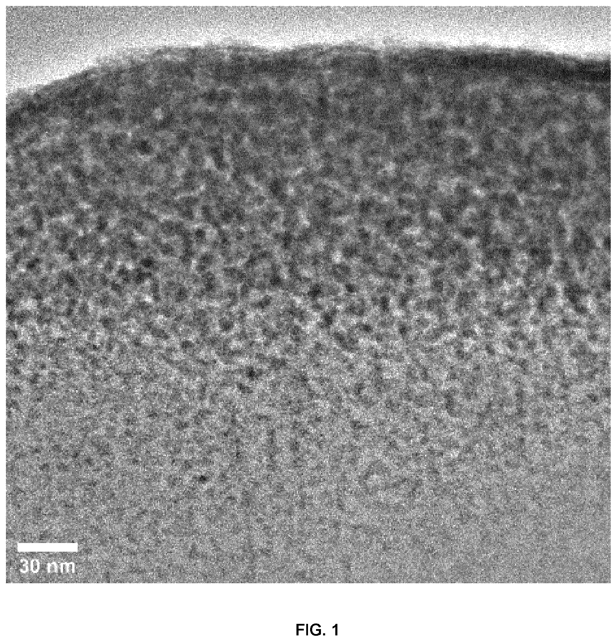

Then, polymeric samples with infiltrated In₂O₃ , indium chloride, and indium oxychloride inclusions were obtained. The samples also showed a thin layer of In₂O₃ on the surface (see Figure 1).

### Self-healing Infiltrated polymeric sample characterization

The infiltrated polymeric samples obtained above were characterized as follows.

The bonding and the element composition of the samples have been studied with X-ray photoelectron spectroscopy (XPS) using a SPECS instrument, equipped with a hemispherical electron analyzer and a monochromatized source of Al Kα X-rays. Binding energies were calibrated by the C 1s peak at 284.5 eV for all samples. Depth profiling was performed by etching the samples with an argon ion gun with an accelerating voltage of 2 keV and a current of 10 µA. To compensate a possible charge accumulation, an electron gun was used.

Attenuated Total Reflectance-Fourier Transform Infrared Spectroscopy (ATR-FTIR) measurements were performed with a PerkinElmer Frontier spectrometer with the ATR sampling stage. Typical acquisition parameters averaged 20 scans from 510 to 4000 cm⁻¹ with the resolution of 4 cm⁻¹.

Scanning electron microscopy (SEM) images were taken with the FEI Helios 450S microscope with an accelerating voltage of 5 keV and a current of 50 pA. To investigate the nature and composition of the samples below the surface, cuts have been made with a focused ion beam (FIB) at 30 kV of accelerating voltage. EDX mapping in SEM was done with an EDAX Octane pro detector. FIB was also utilized for lamella preparation to study the samples in a transmission electron microscope (TEM). TEM characterization and EDX measurements were performed with an FEI Titan microscope at 300 keV acceleration voltage in STEM mode and an EDAX SDD detector.

Figure 1 shows a transmission electron microscope (TEM) micrograph of a ParyleneC sample infiltrated with In₂O₃ at 210 °C. Figure 1 shows an upper dark layer related to a thin indium oxide film, followed by a region where intermixing of organic and inorganic phases was observed. Clusters of indium oxide appear darker in TEM due to the higher atomic mass of indium than that of carbon or chlorine in ParyleneC. The density of indium inside the polymer descended promptly after about 150 nm depth.

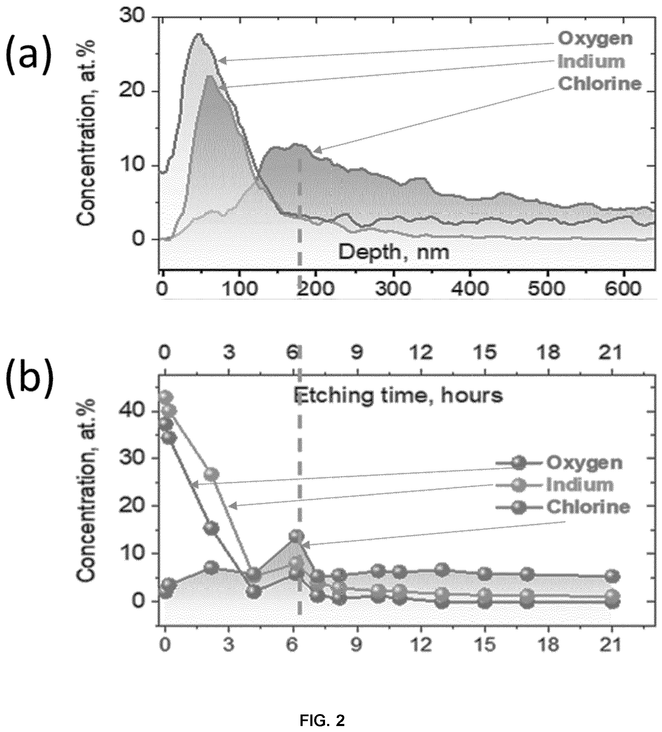

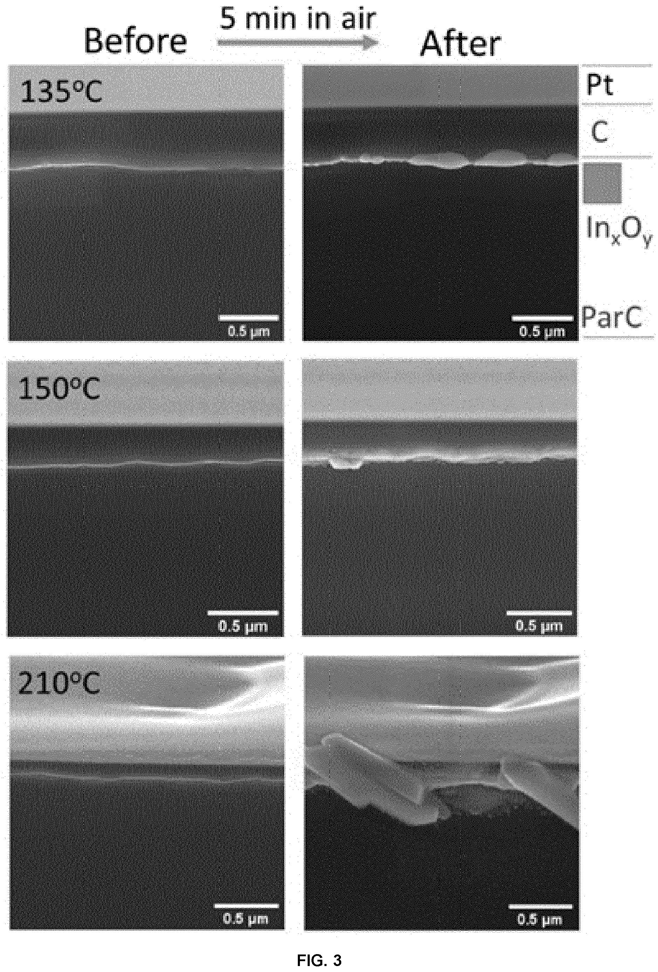

Figure 2 (a) shows an EDX elemental composition depth profile and (b) Atomic concentrations after different etching times calculated from XPS data of a ParyleneC sample infiltrated with In₂O₃ at 210°C. Results from EDX spectra from the same area reaffirmed the sharp decline of indium oxide at that depth. However, a weak indium signal of 2-3 atomic percent reached down to 300 nm. Interestingly, the chlorine signal from the polymer was present already near the surface of the structure (Fig. 3B). It steadily grew through the whole indium oxide infiltrated area and reached its maximum of 13 at. % at 150 - 200 nm depth which was the interface between ParyleneC and layer. Beyond this point, the concentration of chlorine dropped down to 6 at. % which corresponds to the level of chlorine in the pristine polymer. Atomic percent (or at. %), gives the percentage of one kind of atom relative to the total number of atoms.

### Self-healing infiltrated polymeric sample tests

FIB was used to introduce defects into the infiltrated ParyleneC polymeric samples. After etching away the metal oxide In₂O₃ thin film on the surface of the infiltrated polymeric samples by FIB, the material was exposed to ambient air and room temperature. Afterwards, the sample was extracted from the vacuum chamber to ambient atmosphere (atmospheric pressure, room temperature and air). After 5 minutes exposure to air, the samples were placed back into the microscope and examined for changes.

Figure 3 shows SEM images of ParyleneC/In₂O₃ cross-sections before and after exposure to air. Figure 3 shows swelling mostly in the indium infiltrated area. The amount of grown material increased for the samples infiltrated at higher temperatures, as these samples possessed a higher loading of the infiltrate. Moreover, for the sample infiltrated at 210°C, the formation of polycrystalline structures was observed.

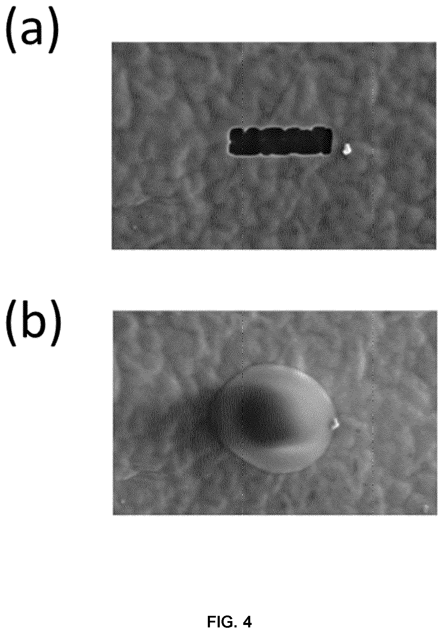

Figure 4 shows SEM images of a cut done by FIB on the surface of a ParyleneC infiltrated sample before (on the left) and after exposure to air (on the right). The defect was produced by FIB by etching away sections of the thin film on the surface and exposing the infiltrated ParyleneC to ambience. After 5 minutes of exposure to air, the structure was examined again by electron microscopy. Figure 4 (b) shows that the defect healed with a spherical deposit of an amorphous material. EDX analysis (not shown) of the cut before exposure to air showed the deficiency of oxygen and indium. In contrast, the healed structure contained oxygen and indium and had a lack of carbon and chlorine signals.

Thus, results showed that the infiltrated polymeric organic-inorganic samples obtained in the present example were able to "self-heal" defects. In particular, the authors observed that when a rupture of defect was created in the sample , the infiltrations moved to the defect site, reacted with air forming indium oxide and healing the rupture or defect with indium oxide.

Thus, the author of the invention have developed self-healing flexible transparent conductive materials, comprising polymeric substrates infiltrated with transparent conductive oxides.

### Example 2: Self-healing organic-inorganic material preparation

Following the same method as in Example 1, a Parylene C substrate was infiltrated by VPI with diethylzinc (DEZ) and water as precursors at process temperatures between 100 and 210 °C to obtain a self-healing organic-inorganic material. The number of infiltration cycles was between 50 and 100. Each VPI cycle for infiltrating a ParyleneC substrate consisted of Pulse (DEZ, 0.4s)/ Exposure(30s)/ Purge(N₂, 60s)/ Pulse(H₂O, 0.4s)/ Exposure(30s)/ Purge(N₂, 60s).

In addition, polyvinyl chloride (PVC) substrates were also infiltrated using DEZ or TMIn and water or hydrogen peroxide precursors obtaining self-healing organic-inorganic materials.

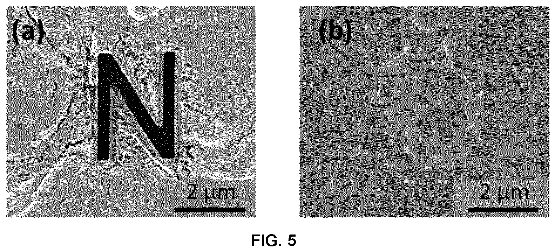

Figure 5 shows a SEM image of focus ion beam (FIB) cut on the surface of PVC infiltrated with DEZ/water A) before exposure to ambient air; B) after exposure to ambient air and room temperature.

### Example 3: Self-healing organic-inorganic material preparation

In the present example a polydimethylsiloxane (PDMS) polymer substrate was infiltrated by a VPI process with thionyl chloride, diethylzinc (DEZ) and water to obtain a self-healing organic-inorganic material.

The number of infiltration cycles was about 15.

Each VPI cycle consisted of:
[Pulse (Thionyl chloride, 0.4s)/ Exposure- (30s)/ Purge (N₂, 20s)] x1 time and
[Pulse (DEZ 0.4s)/ Exposure (30s)/ Purge (N₂, 60s)/ Pulse (H₂O, 0.4s)/ Exposure (30s)/ Purge (N₂, 60s)] x7 times.

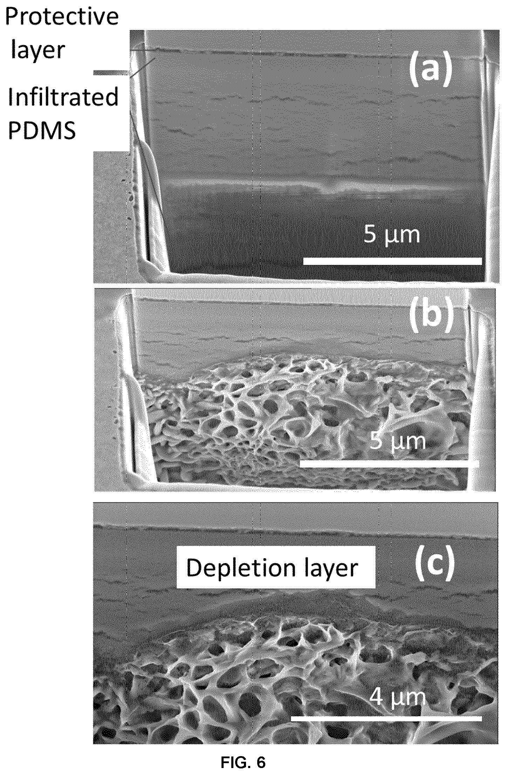

Figure 6 shows an SEM image of a focused ion beam (FIB) cross-section of a PDMS polymer infiltrated with 15 cycles of thionyl chlorine/DEZ/water A) before exposure to ambient air; B) after exposure to ambient air and room temperature; and C) magnification of a part of image B.

The results shows that the PDMS substrate was infiltrated with zinc compounds, such as zinc oxide clusters, zinc chloride and zinc oxychloride inclusions down to more than 10 µm depth as seen on the scanning electron microscopy (SEM) image (fig. 6A), obtained after sectioning the self-healing organic-inorganic material with a focused ion beam (FIB).

After exposure of the cross-section to ambient air at room temperature, the growth of zinc oxide structures (see fig. 6B and 6C) as consequence of the partial conversion of metal chlorines to metal oxides.

In addition, results showed that the higher part of the cross-section has more amount of zinc oxide. In addition, surprisingly, a Zn depletion layer was observed in Figure 6C, indicating mobility of the inorganic clusters towards the growth sites located below.

### Example 4: Self-healing organic-inorganic material preparation

In the present example a PA-6 or Nylon-6 polymer substrate was infiltrated by the VPI process described above in Example 3 using thionyl chloride, diethylzinc (DEZ) and water to obtain a self-healing organic-inorganic material.

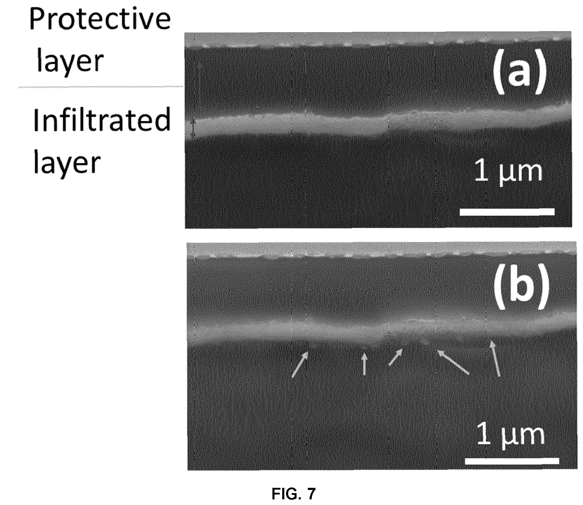

Figure 7 shows a SEM image of a focused ion beam (FIB) cross-section of a Nylon polymer infiltrated with 15 cycles of thionyl chloride/DEZ/water A) before exposure to ambient air; B) after exposure to ambient air and room temperature.

Results showed that the substrates were infiltrated with zinc compounds, such as zinc oxide clusters and zinc chlorines and, after exposure of the cross-section to ambient air at room temperature, the growth of zinc oxide structures was observed.

### Example 5: Permeation barriers for OLEDs

The self-healing organic-inorganic materials fabricated in examples 1-4 are used as permeation barriers for organic light-emitting devices (OLEDs) by thin film encapsulation of said OLEDs with the self-healing organic-inorganic materials.

In particular, the cathode of an active-matrix organic light-emitting diode (AMOLED) is coated with a polymer substrate as described in examples 1-4 by any technique known in the art. Then, said polymer substrate is infiltrated as described in examples 1-4 to obtain a self-healing organic-inorganic material.

The lifetime of encapsulated OLEDs was extended over non encapsulated OLEDs.

### Example 6: Electronic devices

The self-healing organic-inorganic materials fabricated in examples 1-4 are used as part of electronic devices such as parts of polymeric transistors or capacitors. For example, the electrodes of a capacitor are coated with the self-healing organic-inorganic materials fabricated in examples 1-4 .

### Example 7: Textile

The self-healing organic-inorganic materials fabricated in examples 1-4 are applied to fibers or yarns and used in textile materials in personal safety equipment, sport equipment,.

Applications of such woven or non-woven materials include also protective laminate, construction/building materials, packaging, reinforcing or functional materials in automotive, aircraft and aerospace applications.

### Example 8: Packaging

The self-healing organic-inorganic materials fabricated in examples 1-4 are applied to polymeric foils or fibers, woven and non-woven, and used as packaging materials for food or any goods that require protection against humidity or environmental gases such as oxygen. The self-healing materials provide additional protection and extend the shelf-life of those goods.

## Claims

1. A self-healing organic-inorganic material comprising:
- a polymeric substrate,
- a coating layer directly on the surface of the polymeric substrate, and
- an infiltrated layer within the polymeric substrate;
wherein the coating layer and the infiltrated layer comprise at least a metal, semimetal or semiconductor element;
wherein said at least a metal, semimetal or semiconductor element is the same in the coating and infiltrated layers; and
wherein the polymeric substrate or the infiltrated layer within the polymeric substrate comprises a halogen.

2. The self-healing organic-inorganic material according to claim 1, wherein the halogen is selected from a chlorine, fluorine, iodine, bromine or a mixture thereof; preferably is chlorine.

3. The self-healing organic-inorganic material according to any of claims 1 or 2, wherein the polymeric substrate is selected from organosilicon polymers, polyurethanes, polyamides, polyxylylenes, parylenes, polyamines, polyimides, polyalkylenes, polyacrylates, polymethacrylates, polyalcohols, polyethers, polyesters, polyvinyls, polyvinylidenes, halopolymers, polypyrroles, polythiophenes, polystyrenes, polyaromatic hydrocarbons, polysaccharides, polypeptides, polysiloxanes, polysilazanes, polyketones, and mixtures thereof.

4. The self-healing organic-inorganic material according to any one of claims 1 to 3, wherein the polymeric substrate is a halogen-containing polymeric substrate; preferably poly(chloro-p-xylylene), polyvinyl chloride, chlorinated polyvinyl chloride, polyvinylidene chloride, poly(lodine-p-xylylene), polyvinyl Iodine, iodate polyvinyl iodine, polyvinylidene Iodine, polyvinyl bromide, polyvinylidene bromide, polyvinyl fluoride, polyvinylidene fluoride, poly(fluoro-p-xylene), poly(difluoro-p-xylene), poly (tetrafluoro-p-xylene), poly(dichloro-p-xylylene), poly(tetrachloro-p-xylylene), poly(bromo-p-xylene), poly(dibromo-p-xylene), poly(tetrabromo-p-xylene), and combinations thereof.

5. The self-healing organic-inorganic material according to any one of claims 1 to 4, wherein the metal, semimetal or semiconductor element is selected from In, Zn, Al, As, Bi, B, Ca, Cr, Co, Cu, Ga, Ge, Hf, Fe, La, Mg, Mn, Mo, Ni, Pt, Re, Sb, Si, Se, Ti, Ta, Te, Tm, Sn, W, V, Y, Zr and/or Li; preferably is selected from In, Zn, Al, Si, and/or Ti; more preferably is Zn or In.

6. The self-healing organic-inorganic material according to any one of claims 1 to 5, wherein the coating and/or infiltrated layer comprise oxides, nitrides, halides, sulfides, phosphides, phosphates, salts, halogen-containing organic compounds or mixtures thereof of the metal, semimetal or semiconductor element.

7. The self-healing organic-inorganic material according to any one of claims 1 to 6, wherein the coating layer and the infiltrated layer comprise an oxide of the metal, semimetal or semiconductor element;
wherein the metal, semimetal or semiconductor element is selected from In, Zn, Al, Si, or Ti; and
optionally wherein the infiltration layer has a thickness of at least 50 nm.

8. The self-healing organic-inorganic material according to claim 7; wherein the infiltrated layer further comprises a halogen-containing compound of the metal, semimetal or semiconductor element selected from an halide, oxyhalide, hydroxyhalide or a mixture thereof of the metal, semimetal or semiconductor element.

9. A process for the preparation of self-healing organic-inorganic materials according to any one of claims 1 to 8, comprising the steps of:
i) providing a polymeric substrate in a reaction chamber;
ii) if the polymeric substrate of step (i) does not comprise a halogen, pulsing a precursor comprising a halogen into the reaction chamber followed by an exposure time and then, purging of the reaction chamber,
to obtain the polymeric substrate of step (i) infiltrated and optionally coated;
iii) pulsing a precursor comprising a metal, semimetal or semiconductor element into the reaction chamber followed by an exposure time and then, purging of the reaction chamber; and
pulsing a co-reactant into the reaction chamber followed by an exposure time and then purging of the reaction chamber, wherein the co-reactant reacts with at least part of the precursor comprising a metal, semimetal or semiconductor element, to obtain the polymeric substrate of step (i) or of step (ii) coated and infiltrated;
wherein the exposure time between the pulsing and the purging of step (ii) and/or of step (iii) is at least 5 seconds.

10. Process according to claim 9, wherein the exposure time between the pulsing and the purging is at least 10 seconds and/or wherein steps (ii) and (iii) are performed at a temperature between 25 and 300°C; preferably between 180 and 250°C.

11. Process according to any one of claims 9 to 10, wherein steps (ii) and (iii) are repeated; preferably wherein steps (ii) and (iii) are repeated a different number of times; more preferably wherein the process comprises at least a cycle that consist of
- repeating step (ii) a number of times "n"; and
- repeating step (iii) a number of times larger than "n".

12. Process according to any one of claims 9 to 11,
wherein the pulsing time of step (ii) and/or step (iii) is between 0.1 and 100 seconds;
wherein the exposure time between the pulsing and the purging of step (ii) and/or of step (iii) is at least 10 seconds;
wherein steps (ii) and (iii) are performed at a temperature of between 25 and 350°C;
wherein the precursor of the metal, semimetal or semiconductor compound comprises the metal, semimetal or semiconductor element as defined on claim 5; and
wherein the precursor comprising a halogen is selected from hydrogen halides, phosphoryl halides, acyl halides, thionyl halides or mixtures thereof.

13. A self-healing organic-inorganic material obtainable by the process according to any one of claims 9 to 12.

14. A device comprising:
- at least a layer of the self-healing organic-inorganic material according to any of claims 1-8 or 13; and
- an Organic light-emitting device (OLED) comprising at least one electrode;
wherein the layer of the self-healing organic-inorganic material is coating the at least one electrode.

15. Use of the self-healing organic-inorganic material as defined in any of claims 1 to 8 or 13, in the fabrication of electronic materials, optoelectronic materials, absorbent materials, personal safety equipment, sport equipment, construction and building materials, textiles, packaging, automotive and aircraft materials.

## Patentansprüche

1. Selbstheilendes organisch-anorganisches Material, umfassend:
- ein polymeres Substrat,
- eine Beschichtungsschicht unmittelbar auf der Oberfläche des polymeren Substrats und
- eine Infiltrationsschicht innerhalb des polymeren Substrats;
wobei die Beschichtungsschicht und die Infiltrationsschicht mindestens ein Metall-, Halbmetall- oder Halbleiterelement umfassen;
wobei das mindestens eine Metall-, Halbmetall- oder Halbleiterelement in der Beschichtungsschicht und der Infiltrationsschicht dasselbe ist; und
wobei das polymere Substrat oder die Infiltrationsschicht innerhalb des polymeren Substrats ein Halogen umfasst.

2. Selbstheilendes organisch-anorganisches Material nach Anspruch 1, wobei das Halogen aus Chlor, Fluor, lod, Brom oder einem Gemisch davon ausgewählt ist, vorzugsweise Chlor ist.

3. Selbstheilendes organisch-anorganisches Material nach einem der Ansprüche 1 oder 2, wobei das polymere Substrat aus Organosiliciumpolymeren, Polyurethanen, Polyamiden, Polyxylylenen, Parylenen, Polyaminen, Polyimiden, Polyalkylenen, Polyacrylaten, Polymethacrylaten, Polyalkoholen, Polyethern, Polyestern, Polyvinylen, Polyvinylidenen, Halogenpolymeren, Polypyrrolen, Polythiophenen, Polystyrolen, polyaromatischen Kohlenwasserstoffen, Polysacchariden, Polypeptiden, Polysiloxanen, Polysilazanen, Polyketonen sowie Gemischen davon ausgewählt ist.

4. Selbstheilendes organisch-anorganisches Material nach einem der Ansprüche 1 bis 3, wobei das polymere Substrat ein halogenhaltiges polymeres Substrat ist, vorzugsweise Poly(chlor-p-xylylen), Polyvinylchlorid, chloriertes Polyvinylchlorid, Polyvinylidenchlorid, Poly(iod-p-xylylen), Polyvinyliodid, iodiertes Polyvinyliodid, Polyvinylideniodid, Polyvinylbromid, Polyvinylidenbromid, Polyvinylfluorid, Polyvinylidenfluorid, Poly(fluor-p-xylylen), Poly(difluor-p-xylylen), Poly(tetrafluor-p-xylylen), Poly(dichlor-p-xylylen), Poly(tetrachlor-p-xylylen), Poly(brom-p-xylylen), Poly(dibrom-p-xylylen), Poly(tetrabrom-p-xylylen) sowie Kombinationen davon.

5. Selbstheilendes organisch-anorganisches Material nach einem der Ansprüche 1 bis 4, wobei das Metall-, Halbmetall- oder Halbleiterelement aus In, Zn, Al, As, Bi, B, Ca, Cr, Co, Cu, Ga, Ge, Hf, Fe, La, Mg, Mn, Mo, Ni, Pt, Re, Sb, Si, Se, Ti, Ta, Te, Tm, Sn, W, V, Y, Zr und/oder Li ausgewählt ist, vorzugsweise ausgewählt aus In, Zn, Al, Si und/oder Ti, besonders bevorzugt Zn oder In ist.

6. Selbstheilendes organisch-anorganisches Material nach einem der Ansprüche 1 bis 5, wobei die Beschichtungsschicht und/oder die Infiltrationsschicht Oxide, Nitride, Halogenide, Sulfide, Phosphide, Phosphate, Salze, halogenhaltige organische Verbindungen oder Gemische davon des Metall-, Halbmetall- oder Halbleiterelements umfassen.

7. Selbstheilendes organisch-anorganisches Material nach einem der Ansprüche 1 bis 6, wobei die Beschichtungsschicht und die Infiltrationsschicht ein Oxid des Metall-, Halbmetall- oder Halbleiterelements umfassen; wobei das Metall-, Halbmetall- oder Halbleiterelement aus In, Zn, Al, Si oder Ti ausgewählt ist; und optional wobei die Infiltrationsschicht eine Dicke von mindestens 50 nm aufweist.

8. Selbstheilendes organisch-anorganisches Material nach Anspruch 7, wobei die Infiltrationsschicht weiter eine halogenhaltige Verbindung des Metall-, Halbmetall- oder Halbleiterelements umfasst, ausgewählt aus einem Halogenid, Oxyhalogenid, Hydroxyhalogenid oder einem Gemisch davon des Metall-, Halbmetall- oder Halbleiterelements.

9. Verfahren zur Herstellung eines selbstheilenden organisch-anorganischen Materials nach einem der Ansprüche 1 bis 8, umfassend die Schritte:
i) Bereitstellen eines polymeren Substrats in einer Reaktionskammer;
ii) wenn das polymere Substrat gemäß Schritt (i) kein Halogen umfasst, Einbringen eines Halogen enthaltenden Vorläufers in die Reaktionskammer, gefolgt von einer Expositionszeit und anschließendem Spülen der Reaktionskammer,
wodurch das polymere Substrat gemäß Schritt (i) infiltriert und optional beschichtet wird;
iii) Einbringen eines Vorläufers, der ein Metall-, Halbmetall- oder Halbleiterelement umfasst, in die Reaktionskammer, gefolgt von einer Expositionszeit und anschließendem Spülen der Reaktionskammer; und
Einbringen eines Co-Reaktanden in die Reaktionskammer, gefolgt von einer Expositionszeit und anschließendem Spülen der Reaktionskammer, wobei der Co-Reaktand mit zumindest einem Teil des Vorläufers, der ein Metall-, Halbmetall- oder Halbleiterelement umfasst, reagiert, um das polymere Substrat gemäß Schritt (i) oder Schritt (ii) zu beschichten und zu infiltrieren;
wobei die Expositionszeit zwischen dem Einbringen und dem Spülen in Schritt (ii) und/oder Schritt (iii) mindestens 5 Sekunden beträgt.

10. Verfahren nach Anspruch 9, wobei die Expositionszeit zwischen dem Einbringen und dem Spülen mindestens 10 Sekunden beträgt und/oder wobei die Schritte (ii) und (iii) bei einer Temperatur zwischen 25 °C und 300 °C, vorzugsweise zwischen 180 °C und 250 °C, durchgeführt werden.

11. Verfahren nach einem der Ansprüche 9 oder 10, wobei die Schritte (ii) und (iii) wiederholt werden; vorzugsweise wobei die Schritte (ii) und (iii) unterschiedlich oft wiederholt werden; besonders bevorzugt wobei das Verfahren mindestens einen Zyklus umfasst, der besteht aus
- einer Wiederholung des Schritts (ii) n-mal; und
- einer Wiederholung des Schritts (iii) öfter als n-mal.

12. Verfahren nach einem der Ansprüche 9 bis 11,
wobei die Einbringungsdauer in Schritt (ii) und/oder Schritt (iii) zwischen 0,1 und 100 Sekunden beträgt;
wobei die Expositionszeit zwischen dem Einbringen und dem Spülen in Schritt (ii) und/oder Schritt (iii) mindestens 10 Sekunden beträgt;
wobei die Schritte (ii) und (iii) bei einer Temperatur zwischen 25 °C und 350 °C durchgeführt werden;
wobei der Vorläufer der Metall-, Halbmetall- oder Halbleiterverbindung das Metall-, Halbmetall- oder Halbleiterelement gemäß Anspruch 5 umfasst; und wobei der Halogen enthaltende Vorläufer aus Halogenwasserstoffen, Phosphorylhalogeniden, Acylhalogeniden, Thionylhalogeniden oder Gemischen davon ausgewählt ist.

13. Selbstheilendes organisch-anorganisches Material, erhältlich durch das Verfahren nach einem der Ansprüche 9 bis 12.

14. Vorrichtung, umfassend:
- mindestens eine Schicht des selbstheilenden organisch-anorganischen Materials nach einem der Ansprüche 1 bis 8 oder 13; und
- eine organische lichtemittierende Vorrichtung (OLED), umfassend mindestens eine Elektrode;
wobei die Schicht des selbstheilenden organisch-anorganischen Materials die mindestens eine Elektrode beschichtet.

15. Verwendung des selbstheilenden organisch-anorganischen Materials nach einem der Ansprüche 1 bis 8 oder 13 zur Herstellung elektronischer Materialien, optoelektronischer Materialien, absorbierender Materialien, persönlicher Schutzausrüstung, Sportausrüstung, Bau- und Baustoffe, Textilien, Verpackungsmaterialien sowie Materialien für den Automobil- und Flugzeugbau.

## Revendications

1. Un matériau organo-inorganique auto-réparant comprenant :
- un substrat polymère,
- une couche de revêtement directement sur la surface du substrat polymère, et
- une couche infiltrée à l'intérieur du substrat polymère ;
dans lequel la couche de revêtement et la couche infiltrée comprennent au moins un élément métallique, semi-métallique ou semi-conducteur ;
dans lequel ledit au moins un élément métallique, semi-métallique ou semiconducteur est le même dans les couches de revêtement et infiltrée ; et
dans lequel le substrat polymère ou la couche infiltrée à l'intérieur du substrat polymère comprend un halogène.

2. Le matériau organo-inorganique auto-réparant selon la revendication 1, dans lequel l'halogène est choisi parmi le chlore, le fluor, l'iode, le brome ou un mélange de ceux-ci ; de préférence l'halogène est le chlore.

3. Le matériau organo-inorganique auto-réparant selon l'une quelconque des revendications 1 ou 2, dans lequel le substrat polymère est choisi parmi les polymères organosiliciés, les polyuréthanes, les polyamides, les polyxylylènes, les parylènes, les polyamines, les polyimides, les polyalkylènes, les polyacrylates, les polyméthacrylates, les polyalcools, les polyéthers, les polyesters, les polyvinyles, les polyvinylidènes, les halopolymères, les polypyrroles, les polythiophènes, les polystyrènes, les hydrocarbures polyaromatiques, les polysaccharides, les polypeptides, les polysiloxanes, les polysilazanes, les polycétones, et leurs mélanges.

4. Le matériau organo-inorganique auto-réparant selon l'une quelconque des revendications 1 à 3, dans lequel le substrat polymère est un substrat polymère contenant un halogène ; de préférence du poly(chloro-p-xylylène), du chlorure de polyvinyle, du chlorure de polyvinyle chloré, du chlorure de polyvinylidène, du poly(iode-p-xylylène), de l'iodure de polyvinyle, de l'iodure de polyvinyle iodaté, de l'iodure de polyvinylidène, du bromure de polyvinyle, du bromure de polyvinylidène, du fluorure de polyvinyle, du fluorure de polyvinylidène, du poly(fluoro-p-xylène), du poly(difluoro-p-xylène), du poly(tétrafluoro-p-xylène), du poly(dichloro-p-xylylène), du poly(tétrachloro-p-xylylène), du poly(bromo-p-xylène), du poly(dibromo-p-xylène), du poly(tétrabromo-p-xylène), et des combinaisons de ceux-ci.

5. Le matériau organo-inorganique auto-réparant selon l'une quelconque des revendications 1 à 4, dans lequel l'élément métallique, semi-métallique ou semiconducteur est choisi parmi In, Zn, AI, As, Bi, B, Ca, Cr, Co, Cu, Ga, Ge, Hf, Fe, La, Mg, Mn, Mo, Ni, Pt, Re, Sb, Si, Se, Ti, Ta, Te, Tm, Sn, W, V, Y, Zr et/ou Li ; de préférence l'élément métallique, semi-métallique ou semi-conducteur est choisi parmi In, Zn, AI, Si et/ou Ti ; plus préférablement l'élément métallique, semi-métallique ou semi-conducteur est Zn ou In.

6. Le matériau organo-inorganique auto-réparant selon l'une quelconque des revendications 1 à 5, dans lequel la couche de revêtement et/ou la couche infiltrée comprennent des oxydes, des nitrures, des halogénures, des sulfures, des phosphures, des phosphates, des sels, des composés organiques contenant des halogènes ou des mélanges de ceux-ci de l'élément métallique, semi-métallique ou semiconducteur.

7. Le matériau organo-inorganique auto-réparant selon l'une quelconque des revendications 1 à 6, dans lequel la couche de revêtement et la couche infiltrée comprennent un oxyde de l'élément métallique, semi-métallique ou semi-conducteur ;
dans lequel l'élément métallique, semi-métallique ou semi-conducteur est choisi parmi In, Zn, AI, Si ou Ti ; et
optionnellement dans lequel la couche d'infiltration a une épaisseur d'au moins 50 nm.

8. Le matériau organo-inorganique auto-réparant selon la revendication 7 ; dans lequel la couche infiltrée comprend en outre un composé contenant un halogène de l'élément métallique, semi-métallique ou semi-conducteur choisi parmi un halogénure, un oxyhalogénure, un hydroxyhalogénure ou un mélange de ceux-ci de l'élément métallique, semi-métallique ou semi-conducteur.

9. Procédé de préparation de matériaux organo-inorganiques auto-réparants selon l'une quelconque des revendications 1 à 8, comprenant les étapes consistant à :
i) fournir un substrat polymère dans une chambre de réaction ;
ii) si le substrat polymère de l'étape (i) ne comprend pas d'halogène, pulser un précurseur comprenant un halogène dans la chambre de réaction suivi d'un temps d'exposition et puis, purger la chambre de réaction,
pour obtenir le substrat polymère de l'étape (i) infiltré et éventuellement revêtu ;
iii) pulser un précurseur comprenant un élément métallique, semi-métallique ou semi-conducteur dans la chambre de réaction suivi d'un temps d'exposition et puis, purger la chambre de réaction ; et
pulser un co-réactif dans la chambre de réaction suivi d'un temps d'exposition et puis purger la chambre de réaction, le co-réactif réagissant avec au moins une partie du précurseur comprenant un élément métallique, semi-métallique ou semi-conducteur, pour obtenir le substrat polymère de l'étape (i) ou de l'étape (ii) revêtu et infiltré ;
dans lequel le temps d'exposition entre la pulsation et la purge de l'étape (ii) et/ou de l'étape (iii) est d'au moins 5 secondes.

10. Procédé selon la revendication 9, dans lequel le temps d'exposition entre la pulsation et la purge est d'au moins 10 secondes et/ou dans lequel les étapes (ii) et (iii) sont réalisées à une température comprise entre 25 et 300 °C ; de préférence entre 180 et 250 °C.

11. Procédé selon l'une quelconque des revendications 9 à 10, dans lequel les étapes (ii) et (iii) sont répétées ; de préférence dans lequel les étapes (ii) et (iii) sont répétées un nombre de fois différent ; plus préférablement dans lequel le procédé comprend au moins un cycle qui consiste à
- répéter l'étape (ii) un nombre de fois « n », et
- répéter l'étape (iii) un nombre de fois supérieur à « n ».

12. Procédé selon l'une quelconque des revendications 9 à 11,
dans lequel le temps de pulsation de l'étape (ii) et/ou de l'étape (iii) est compris entre 0,1 et 100 secondes ;
dans lequel le temps d'exposition entre la pulsation et la purge de l'étape (ii) et/ou de l'étape (iii) est d'au moins 10 secondes ;
dans lequel les étapes (ii) et (iii) sont réalisées à une température comprise entre 25 et 350 °C ;
dans lequel le précurseur du composé métallique, semi-métallique ou semiconducteur comprend l'élément métallique, semi-métallique ou semi-conducteur tel que défini dans la revendication 5 ; et
dans lequel le précurseur comprenant un halogène est choisi parmi les halogénures d'hydrogène, les halogénures de phosphoryle, les halogénures d'acyle, les halogénures de thionyle ou leurs mélanges.

13. Un matériau organo-inorganique auto-réparant susceptible d'être obtenu par le procédé selon l'une quelconque des revendications 9 à 12.

14. Un dispositif comprenant :
- au moins une couche du matériau organo-inorganique auto-réparant selon l'une quelconque des revendications 1 à 8 ou 13 ; et
- un dispositif électroluminescent organique (OLED) comprenant au moins une électrode ;
dans lequel la couche du matériau organo-inorganique auto-réparant recouvre ladite au moins une électrode.

15. Utilisation du matériau organo-inorganique auto-réparant tel que défini dans l'une quelconque des revendications 1 à 8 ou 13, dans la fabrication de matériaux électroniques, de matériaux optoélectroniques, de matériaux absorbants, d'équipements de sécurité individuelle, d'équipements sportifs, de matériaux de construction et du bâtiment, de textiles, d'emballages, de matériaux automobiles et aéronautiques.
